# EUROPEAN PATENT APPLICATION

(11) **EP 1 056 297 A2**
(43) Date of publication of application: **29.11.2000**
(21) Application number: 00303954.2
(22) Date of filing: 11.05.2000
(51) Int. Cl.: H04N 7/64, H04N 7/52

(54) **Multimedia decoder with error detection**

(30) Priority: 24.05.1999 US 317584
(71) Applicant: Agilent Technologies Inc., Santa Clara, California 95052-8043 (US)
(72) Inventor: van den Branden Lambrecht, Christian J., Sunnyvale, California 94089 (US); Verscheure, Olivier, Ossining, New York 10562 (US); Ong, Chong Tean, Richmond, B.C. V7C 1E9 (CA); Darmstaedter, Vincent, 1410 Waterloo (BE)
(74) Representative: Jehan, Robert

(57) **Abstract**

A system decoder (720) alerts audio and video decoders (730, 740) to the presence of errors in a multimedia bitstream (721) prior to decoding the audio and video bitstreams (727, 737) contained within the mutimedia bitstream. The detection of errors prior to decoding permits audio and video decoders to reliably re-synchronise on valid data after occurrence of the error. A multimedia bitstream quality analysis system (1600) is also described that is capable of assessing the quality of a multimedia bitstream (1606). The quality analysis system provides a variety of metrics (1670) indicative of the quality of the multimedia bitstream. Quality metrics include the number of samples of reconstructed audio and video data that were lost, delayed, or corrupted, as well as the number of samples of audio and video data that were dependent thereon.

## Description

The present invention relates generally to a decoder and, more particularly, to a method and apparatus for decoding digitally compressed audio, video and multimedia communications and for assessing the quality of such communications.

Digital audio and digital video as well as digital multimedia (i.e., both digital audio and digital video) communication devices are used in a wide variety of applications including digital television, digital video on demand, INTERNET telephony, multimedia services over the INTERNET, etc. Each of these applications typically utilize some form of data compression. Although there are a myriad of data compression schemes, a number of such schemes have been standardized for use with audio and/or video data and widely adopted by industry, such as MPEG 1, 2, or 4, H.261, H.263, G.711, G. 722, G.723.1, G.728, G.729 (hereinafter termed "G.72x"), etc. Each of these compression schemes relies on a differential encoding of audio and/or video data to reduce redundancy in a stream of data. The compressed stream of audio and/or video data can thus be represented by a fewer number of bits than the original data. As a result, the compressed data stream can be transmitted to a receiving device using a smaller amount of bandwidth.

For example, in a typical multimedia communication, digital audio and video encoders are used to compress audio and video data into compressed audio and video data streams which are then multiplexed into a multimedia bitstream. The multimedia bitstream can then be communicated by a transmitting device over some form of transmission medium to a receiving device. The receiving device provides the received multimedia bitstream to a multimedia decoder that demultiplexes or separates the compressed audio and video data streams from the multimedia bitstream. The audio and video data streams are then provided to audio and video decoders that decompress their respective data streams to produce reconstructed audio and video output data. The reconstructed audio and video output data is then provided to a display and/or recording device.

Regardless of whether a communication includes audio data, video data, or both, such communications are generally transmitted and received over a packet switched network. Packet switched networks, like other types of networks, are susceptible to data corruption, loss, and delay. In general, the amount of data corruption, loss, and delay that can be anticipated during a communication varies depending upon, for example, the type of communication medium (e.g., satellite, cable, RF, etc.), the type of packet switched network, and the communication layers used for the communication (e.g., ATM, IP, etc.).

Although data corruption, loss, and delay is problematic for any type of communication, it is especially problematic when the data that is corrupted, lost, or delayed relates to a compressed data steam. This is because the corruption, loss, or delay of a compressed data stream adversely affects both the data that has been actually corrupted, lost, or delayed, as well as any data predicted from, or otherwise dependent upon, that corrupted, lost, or delayed data. Thus, in addition to the above-noted factors, for a communication that includes a compressed data stream, the amount of erroneous decompressed output data that can be anticipated due to corruption, loss, or delay of the compressed data stream will also vary dependent upon the type of information that is corrupted, lost, or delayed, such as compressed audio or video data, header information, system information, etc., the type of compression algorithm, the degree of compression, etc.

For example, when the data that is corrupted, lost, or delayed is compressed MPEG video data of an intra-coded (I) picture, those portions of predictive-coded (P) pictures or bi-directionally-predictive-coded (B) pictures that are predicted from the corrupted, lost, or delayed compressed video data of that I-picture are adversely affected. In contrast, the corruption, loss, or delay of compressed MPEG video data of a B picture only affects that portion of the B picture corresponding to the corrupted, lost, or delayed compressed video data. Alternatively, when header data such as an MPEG slice header, an MPEG picture header, an MPEG Group of Pictures (GOP) header, or an MPEG sequence header is corrupted, lost, or delayed, the affect of such errors can be more severe. For example, corruption of slice header data relating to a portion of an I picture adversely affects that entire portion of the I picture, regardless of the validity of the compressed MPEG video data contained therein. Moreover, any portions of P or B pictures that are predicted from the affected portion of the I picture are also adversely affected.

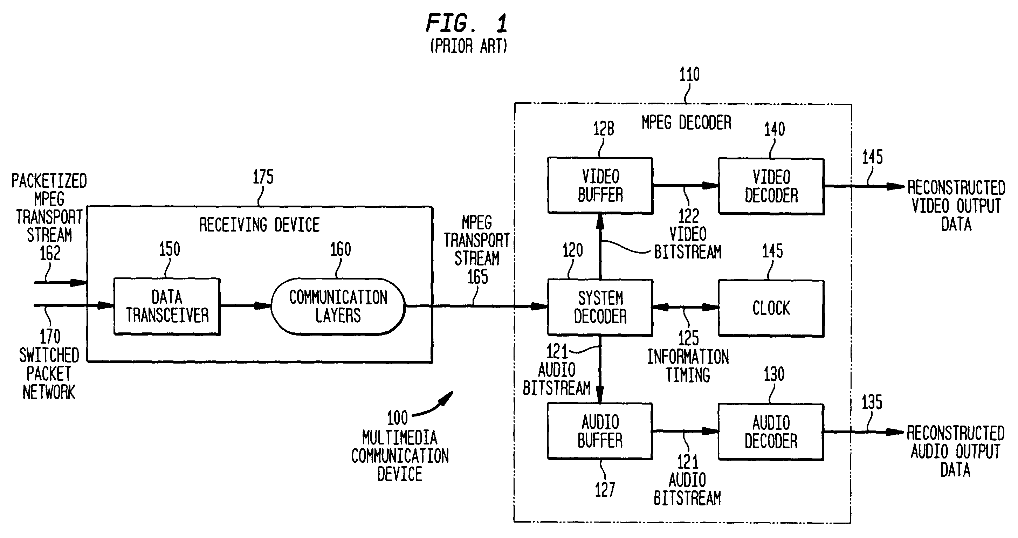

Figure 1 illustrates a conventional multimedia communication device for use in receiving and decoding a multimedia communication that includes both audio and video data. In this illustrative example, the multimedia communication device 100 receives and decodes a multimedia communication that includes an MPEG bitstream, such as an MPEG-2 transport stream. The MPEG-2 transport stream defines a packetized protocol for multiplexing multiple MPEG-2 compressed bitstreams into a packetized fixed-length (i.e., 188 bytes) format, called Transport Stream or TS packets, for transmission on digital networks. The MPEG-2 transport stream includes sophisticated timing information, such as a Program Clock Reference (PCR), Presentation and Decoding Time Stamps (PTS, and DTS), etc., and small fixed-sized packets that allow a wide range of applications for MPEG-2. The MPEG-2 transport stream is specified for a variety of communication systems including Digital Video Broadcast (DVB) communication systems, HDTV systems, ATSC (Advanced Television Systems Committee) systems, etc. In particular, the MPEG-2 transport stream is specified for the digital broadcasting of audio, video, and other data over a wide variety of communication networks, including satellite, cable, and terrestrial networks. For example, DVB standards include specific recommendations for the broadcasting of audio, video, and other data over satellite transmission systems (DVB-S), cable transmission systems (DVB-C), terrestrial transmission systems (DVB-T), etc. Each of these broadcast systems use MPEG-2 compression algorithms and an MPEG-2 transport stream.

As shown in Figure 1, multimedia communication device 100 includes an MPEG multimedia decoder 110 operatively coupled to a receiving device 175 for receiving multimedia communications from a switched packet network 170. The MPEG decoder 110 includes a system decoder 120, an audio buffer 127, a video buffer 128, an audio decoder 130, a video decoder 140, and a clock 145. The MPEG decoder 110 is generally viewed as operating at the application communication layer (e.g., layer 7 of the Open Systems Interconnection (OSI) reference model) of the communication device 100, while the receiving device 175 is viewed as operating at the physical through presentation communication layers (e.g., layers 1-6 of the OSI reference model). Receiving device 175 includes a data transceiver 150 to receive a packetized MPEG transport stream 162 from the switched packet network 170, and a plurality of communication layers 160 (e.g., layers 2-6 of the OSI reference model) for providing an MPEG transport stream 165 to the MPEG decoder 110. The term "packetized MPEG transport stream "is used herein to distinguish the bitstream that is received by the transceiver 150 from the bitstream (i.e., the MPEG transport stream 165) that is received by the MPEG decoder 110. However, it should be appreciated that both the packetized MPEG transport stream 162 and the MPEG transport stream 165 contain information that is separated into packets.

Receiving device 175 receives a packetized MPEG transport stream 162 from the network 170, extracts the MPEG transport stream 165 from the packetized MPEG transport stream 162, and provides the MPEG transport stream 165 to the MPEG decoder 110. In addition, the communication layers 160 between the physical layer of the transceiver 150 and the application layer of the MPEG decoder 110 may perform some level of error detection and correction before providing the MPEG transport stream 165 to the MPEG decoder 110.

The system decoder 120 receives the MPEG transport stream 165 from the receiving device 175 and demultiplexes or parses the MPEG transport stream 165 to separate an audio bitstream 121, a video bitstream 122, and timing information 125 from the MPEG transport stream 165. Timing information 125 separated from the MPEG transport stream 165 includes the Program Clock Reference (PCR) and the Decoding and Presentation Time Stamps (PTS, DTS). The system decoder 120 provides the separated audio and video bitstreams 121, 122 (containing compressed audio and video data), in frames, to the audio buffer 127 and the video buffer 128, respectively, for subsequent removal and decoding by the audio decoder 130 and the video decoder 140, respectively. Timing information 125 allows the system decoder 120 to control the rate at which the separated audio and video bitstreams 121, 122 are provided to the audio and video buffers 127, 128 so that the audio and video decoders 130, 140 can remove and decode their respective bitstreams at the time identified in the decoding time stamp (DTS). The audio decoder 130 and the video decoder 140 decode the audio and video bitstreams 121, 122 at the time identified in the decoding time stamp to provide reconstructed audio and video output data 135, 145, respectively. Reconstructed audio and video output data 135, 145 can then be provided to a display or recording device (not shown), or temporarily stored in a buffer for output at the time indicated by the Presentation Time Stamp (PTS).

Although not depicted in Figure 1, the MPEG decoder 110 may also include a number of other buffers in addition to audio buffer 127 and video buffer 128. For example, MPEG decoders typically include a buffer for temporarily storing MPEG transport stream packets prior to decoding by the system decoder 120. Where the MPEG decoder 110 includes multiple audio and video decoders, the MPEG decoder 110 will typically include multiple audio and/or video buffers, each storing a separated audio and video bitstream, in frames, after separation by the system decoder 120 and prior to removal and decoding by a respective audio and video decoder. Conventional MPEG decoders typically include at least one buffer for each audio or video decoder in the MPEG decoder.

The design of conventional audio, video and multimedia decoders, such as the MPEG multimedia decoder 110, is typically premised on the assumption that they will receive an error-free bitstream. This assumption is generally valid for those decoders that are used as playback devices, such as a DVD player, as the bitstream is received from a local and presumably error-free storage medium. However, Applicants have found this assumption is often invalid when conventional audio, video and multimedia decoders are used in a communication device. This is because most communication devices receive communications, and thus the bitstream, over a communication channel that is subject to data loss, corruption, and delay. As such, conventional audio, video and multimedia decoders that expect to receive an error-free bitstream are ill-prepared to cope with a bitstream that is received over a lossy communication channel. This problem is exacerbated when the received bitstream is to be decoded and/or presented in real time, as such real time operation leaves no opportunity for the receiving communication device to request and receive corrected data, even when the retransmission of corrected data is permitted by the applicable encoding and transmission standard.

For example, in a conventional decoder such as the MPEG decoder 110, the MPEG transport stream 165 is provided to the system decoder 120, regardless of whether any errors are present in the packetized MPEG transport stream 162. These errors are typically due to data that is corrupted, lost, or delayed during transmission over the switched packet network 170, as the rest of the communication equipment (e.g., the MPEG encoders and multiplexers, the transmitting and receiving devices, etc) are presumed to be error-free. When the receiving device 175 (i.e., the communication layers 160 between the physical layer of the transceiver 150 and the application layer of the MPEG decoder 110) can detect and correct corrupted data in the packetized MPEG transport stream 162, a corrected MPEG transport stream 165 is provided to the system decoder 120. However, when errors cannot be detected and corrected (e.g., when the packetized MPEG transport stream 162 includes multiple bit errors not correctable through the use of error correcting codes, or when TS packets are lost or delayed), the MPEG transport stream 165 provided to the system decoder 120 will contain those errors. During the decoding of the MPEG transport stream by the system decoder 120, or during the decoding of the separated audio and video bitstreams 121, 122, the MPEG decoder 110 eventually detects the corruption, loss, or delay when that corruption, loss, or delay manifests itself in a decoding error.

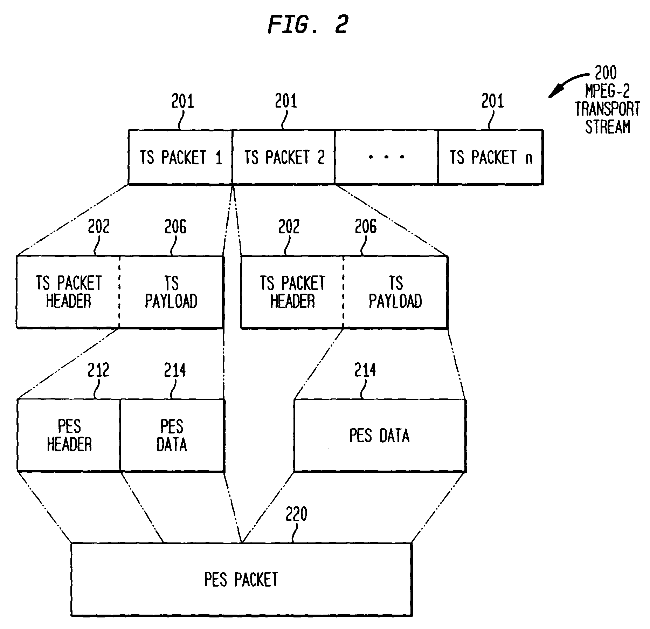

In conventional audio, video and multimedia decoders, the detection of corrupted, lost, and delayed data in a bitstream is typically based solely on the syntax of the audio, video, or multimedia bitstream. For example, in a conventional MPEG decoder, such as the MPEG decoder 110 of Figure 1, this detection is typically based on the syntax of the MPEG transport stream 165, the syntax of the audio bitstream 121, or the syntax of the video bitstream 122. Such syntactic information commonly includes packet headers in the MPEG transport stream or Packetized Elementary Stream (PES), system information such as decoding and presentation time stamps, sequence headers, GOP headers, picture headers, or slice headers in the video bitstream, audio frame headers in the audio bitstream, etc. This syntactic information can include both the order in which this information is received, as well as its content. Any discrepancy from the very specific and defined syntax of the MPEG standard is presumed to be due to errors imparted by the communication channel. The processes performed by a conventional MPEG multimedia decoder to address corrupted, lost, or delayed information in a multimedia bitstream are now described with reference to Figures 2-4.

Figure 2 illustrates the packetized structure of an MPEG-2 transport stream such as would appear as MPEG transport stream 165 in Figure 1. As shown in Figure 2, MPEG transport stream 200 includes a plurality of fixed length (i.e., 188 bytes) packets, where each trasport stream (TS) packet 201 includes a TS packet header 202 and a payload 206 that includes at least a portion of a Packetized Elementary Stream (PES) packet of data 220 corresponding to exactly one audio or video elementary stream. The TS packet header 202 includes a sync byte or start code, an adaptation field, a stream identifier, a continuity counter, and a number of other fields. The adaptation field is used for byte stuffing to achieve a fixed length TS packet and can include essential system timing information, such as the program clock reference (PCR) that synchronizes the system decoder clock 145 to the system encoder clock (not shown). The stream identifier uniquely identifies the PES to which the TS packet 201 pertains. The continuity counter identifies each TS packet 201 in the MEG-2 transport stream 200 and is used by the system decoder to detect the presence of lost TS packets 201 in the transport stream 200.

Each TS payload 206 includes a PES packet header 212 (optional), and PES packet data 214. Each PES packet 220 is divided into the payloads 206 of one or more TS packets 201. The TS packet payload 206 including the first portion of a PES packet of data 220 includes the PES packet header 212, and a first portion of PES packet data, while subsequent TS packet payloads 206 will include the next portions of PES packet data, unaccompanied by a PES packet header 212. This is shown, for example in Figure 2, where PBS packet 220 is divided into the payloads of two consecutive TS packets 201, with the first TS packet payload 206 including the PES header 212 and a first portion of the PES data 214, and the susequent TS packet payload 206 including only PES packet data 214.

The PES packet header 212 includes a packet start code that indicates the type of packet (i.e., a system packet, a video packet, or an audio packet) and identifies the particular bitstream to which the data pertains. The packet header 212 also contains information pertaining to the audio or video decoders 130, 140 (Figure 1), such as decoding and presentation time stamps (DTS, PTS), buffer information, etc.

Based solely on information contained in the TS packet header 202 and the PES packet header 212, the system decoder 120 identifies whether the bitstream pertains to an audio bitstream 121 or a video bitstream 122 without actually decoding the actual audio or video bitstream data. Based on this same information, the system decoder 120 can identify whether a packet has been lost, whether a packet has been received too late to be decoded, or whether the received packet contains corrupted data at the packet level (i.e., whether the pack and packet start codes and headers contain corrupted information). It should be appreciated that because the system decoder 120 only examines packet level data, a conventional system decoder is incapable of detecting errors within the actual audio or video bitstream data itself.

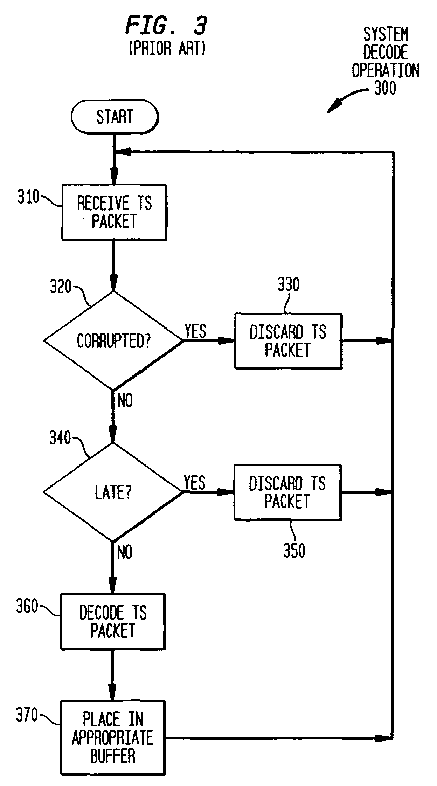

Figure 3 is a flowchart that describes the operation of a conventional system decoder (e.g., system decoder 120 in Figure 1). At step 310, the system decoder 120 receives a transport stream (TS) packet from the receiving device 175 (or more typically, from a buffer that temporality stores TS packets received from the receiving device 175), and proceeds to step 320. At step 320, a determination is made as to whether the TS packet includes data that has been corrupted. This is typically determined by comparing some or all of the above-noted packet level information to the MPEG standard. When the TS packet is corrupted (i.e., when the packet headers 202, 212 contain information that does not agree with the MPEG standard), the system decoder 120 simply discards the TS packet at step 330 and returns to step 310. Alternatively, when the system decoder 120 determines that the TS packet does not appear to be corrupted, the system decoder proceeds to step 340. At step 340, a determination is made as to whether the TS packet has been received too late to be decoded. This step is typically performed by comparing the current value of the system clock 145 to the value of the DTS in the PES packet header 212, which indicates the time at which the system decoder 120 must decode the packet.

When it is determined that the TS packet has been received too late to be decoded, the system decoder 120 proceeds to step 350, wherein the TS packet is simply discarded. After discarding the late TS packet at step 350, the system decoder returns to step 310, wherein the system decoder 120 receives the next TS packet. Alternatively, when it is determined at step 340 that the TS packet has been received in time for decoding, the system decoder 120 proceeds to step 360. At step 360, the system decoder 120 decodes the TS packet based on the packet level information to separate out the audio or video bitstream 121, 122 contained within the TS packet. After separating the audio or video bitstreams 121, 122 in step 360, the system decoder 120 proceeds to step 370. At step 370, the system decoder 120 places the separated audio or video bitstreams 121, 122, frame by frame, into the appropriate audio or video buffer 127, 128 for subsequent removal and decoding by either the audio or video decoder 130, 140 at the time identified in the DTS. After placing the separated audio or video bitstreams 121, 122 into the appropriate buffer 127, 128 at step 370, the system decoder 120 returns to step 310, wherein the next TS packet is received and processed.

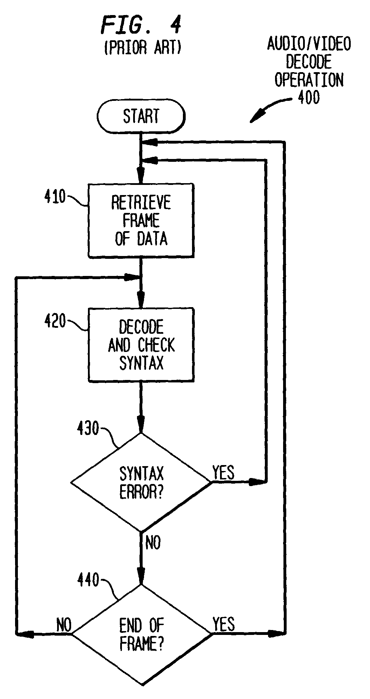

As noted above, when errors in a packet header 202, 212 are detected by a conventional MPEG system decoder, or when a TS packet is received too late to be decoded, the system decoder 120 simply discards the entire packet of data and processes the next received packet. Alternatively, when a lost TS packet is detected by the system decoder 120, for example, by examining the values of continuity counters contained within each received TS packet, the system decoder 120 simply processes the next received packet. Under either circumstance, the audio or video decoder 130, 140 that was intended to receive the discarded or lost bitstream data only detects the presence of the error when it attempts to decode the audio or video bitstream 121, 122 and cannot. To illustrate how a conventional audio or video decoder deals with such errors in a bitstream, the operation of an audio or video decoder 130, 140 is now described with respect to Figure 4.

As noted above with respect to Figure 3, after the system decoder 120 separates the audio or video bitstreams 121, 122, the system decoder 120 places the audio or video bitstream data, frame by frame, into a buffer 127, 128 for subsequent decoding by the audio or video decoder 130, 140. At step 410, the audio or video decoder 130, 140 retrieves a frame of bitstream data from the appropriate buffer 127, 128 and proceeds to step 420. At step 420, the audio or video decoder 130, 140 decodes the first portion of bitstream data in the frame of audio or video bitstream data in a well known manner. During the decoding, the audio or video decoder 130, 140 checks the syntax of the bitstream data and can detect The presence of errors (whether due to data loss, corruption, or delay) in the audio and video bitstreams 121, 122. When an error in the syntax of the audio or video bitstream 121, 122 is detected at step 430, the audio or video decoder 130, 140 typically discards the rest of the frame of bitstream data. Provided that the error is recoverable; that is, the error does not crash the audio or video decoder 130, 140, the audio or video decoder 130, 140 returns to step 410 for the next frame of bitstream data. It should be appreciated that due to the predictive nature of the bitstream data, the next frame may be dependent upon a previously discarded frame. As a result, the reconstructed audio and video output data 135, 145 of the next frame of bitstream data, as well as others frames of bitstream data, may be impaired by the discarding of a previous frame of bitstream data.

Alternatively, when no syntax errors in the audio or video bitstream 121, 122 are detected at step 430, the audio or video decoder 130, 140 proceeds to step 440, wherein the decoder determines whether the end of the frame of audio or video bitstream data has been reached. When it is determined that the end of the frame has not been reached, the audio or video decoder 130, 140 returns to step 420 wherein the next portion of data in the frame of audio or video bitstream data is decoded. Alternatively, when it is determined at step 440 that the end of the data frame has been reached, the audio or video decoder 130, 140 returns to step 410 to retrieve the next frame of bitstream data.

As noted above, a conventional audio or video decoder typically detects errors in an audio or video bitstream utilizing solely the syntax of the audio or video bitstream 121, 122. When a TS packet is discarded by the system decoder 120, or when a TS packet is lost, no information is placed in the buffer 127, 128 for decoding by the audio or video decoder 130, 140. This generally results in a buffer underflow condition wherein the audio or video decoder 130, 140 attempts to decode information that is not present in the appropriate audio or video buffer 127, 128, or attempts to decode other information that is in the buffer and which belongs to a future frame of bitstream data. However, because the information contained within the buffer can remain syntactically correct, for example where an entire slice of video data is discarded, the audio or video decoder 130, 140 may not even detect the error. Alternatively, the audio or video decoder 130, 140 may detect the error much later in the bitstream, and attribute the error to valid bitstream data that was received by the audio or video decoder 130, 140 after the actual occurrence of the error. Thus, valid bitstream data received after an error may be misinterpreted by the audio or video decoder 130, 140 as erroneous data. Moreover, because the audio or video decoder 130, 140 may detect the error well after the actual occurrence of the error, it may take a significant amount of time for the audio or video decoder 130, 140 to re-synchronize on valid bitstream data and resume normal operations. In certain situations, the operation of the audio or video decoder 130, 140 may become so impaired that the audio or video decoder 130, 140 does not re-synchronize at all (i.e., crashes) or does not re-synchronize until the next audio or video sequence.

The present invention seeks to provide improved multimedia decoding.

According to an aspect of the present invention, there is provided a multimedia decoder as specified in claim 1.

According to another aspect of the present invention, there is provided a method of decoding a multimedia bitstream as specified in claim 5.

According to another aspect of the present invention, there is provided an analyser for assessing a quality of a compressed bitstream as specified in claim 8.

According to one aspect of the present invention, a multimedia decoder is provided that is capable of detecting errors in a multimedia bitstream and alerting an audio and/or video decoder to the presence of those errors for consideration when decoding the separated audio and/or video bitstreams. In one embodiment, a multimedia decoder detects errors in a communication that includes a digitally compressed audio, video, or multimedia bitstream, wherein the detected errors occur at a communication layer lower than that of the multimedia decoder. Because the decoder is alerted that the compressed audio, video, or multimedia communication includes data that has been lost or corrupted prior to decoding the audio, video or multimedia bitstream, the decoder is capable of re-synchronising to the next syntactic unit of information (e.g. slice header, picture header, GOP header, etc.) that does not include lost or corrupted data.

In one embodiment of the present invention directed to an MPEG decoderm, when an error is detected by a communication layer below the MPEG decoder, that information is provided to the MPEG decoder. Specifically, in response to the receipt of an error signal indicating the loss or corruption of data, the MPEG decoder operates in a failsafe mode where it searches for the earliest point of re-synchronization in the erroneous bitstream. In this way, because the MPEG decoder has advanced knowledge that the communication it has received includes erroneous data, the false detection of errors is avoided. Furthermore, because the MPEG decoder is alerted to the error condition in advance of decoding, the MPEG decoder is capable of reliably re-synchronizing to the earliest possible point of error-free data in the corrupted bitstream.

The multimedia decoder can be used as part of an analysis tool to analyze the quality of an audio, video or multimedia communication. In this regard, the analysis tool can identify the number of samples of reconstructed output data that were actually lost or corrupted due to errors in the received communication, as well as identify the number of samples of reconstructed output data that were dependent thereon. The above features can be used with a wide variety of audio and/or video compression schemes, such as MPEG 1, 2, or 4, H.261, H.263, G.711, G.72x, etc., and can be used to assess the quality of audio, video, and multimedia communications received over any type of switched packet network, such as digital TV over satellite, digital TV over cable, digital TV over terrestrial broadcasting, audio (e.g., voice) and/or video over IP, or audio and/or video over ATM, etc.

According to one embodiment of the present invention, a multimedia decoder is provided and described. The multimedia decoder includes a system decoder to receive the multimedia bitstream and provide at least one of an audio bitstream and a video bitstream along with a first error signal that identifies whether the at least one of the audio bitstream and the video bitstream contains erroneous data.

According to another embodiment of the present invention, a method of decoding a multimedia bitstream is provided and described. The method of decoding the multimedia bitstream includes steps of receiving the multimedia bitstream, detecting whether the multimedia bitstream includes erroneous data, separating at least one of a compressed audio bitstream and a compressed video bitstream from the multimedia bitstream, and alerting at least one of an audio decoder and a video decoder when erroneous data is detected in the multimedia bitstream.

According to another embodiment of the present invention, an analyzer for assessing the quality of a compressed bitstream is provided and described. The analyzer includes an input to receive the compressed bitstream and an output that provides a metric indicative of an amount of data in the compressed bitstream that could not be correctly reconstructed due to errors in the compressed bitstream.

According to a further embodiment of the present invention a method of assessing a quality of a communication that includes a compressed bitstream is provided and described. The method includes steps of detecting errors in the compressed bitstream and determining an amount of reconstructed bitstream data that could not be reconstructed due to the errors in the compressed bitstream.

According to a still further embodiment of the present invention, a method of transmitting an encoded bitstream is provided and described. The method includes steps of simulating an amount of reconstructed bitstream data that would be accurately reconstructed when the encoded bitstream is received over a packetized network having a predetermined error rate and adjusting, responsive to the step of simulating, a manner in which the data is encoded prior to transmitting the encoded bitstream.

An embodiment of the present invention is described below, by way of example only, with reference to the accompanying drawings, in which:
Figure 1 is a functional block diagram of a conventional multimedia communication device that includes a multimedia decoder;
Figure 2 illustrates the pack and packet structure of an MPEG-2 transport stream;
Figure 3 is a flowchart illustrating the operation of a conventional MPEG system decoder;
Figure 4 is a flowchart illustrating the operation of a conventional MPEG audio or video decoder;
Figure 5 is a functional block diagram of an audio, video, or multimedia decoder according to one embodiment of the present invention;
Figure 6 illustrates an example of a computer platform on which embodiments of the present invention can be implemented;
Figure 7 is a functional block diagram of a communication device that includes an MPEG decoder according to one embodiment of the present invention;
Figure 8 is an exemplary flowchart illustrating the operation of an MPEG system decoder according to one embodiment of the present invention;
Figure 9 is an exemplary flowchart illustrating the operation of an MPEG audio or video decoder according to one embodiment of the present invention;
Figure 10 is an exemplary flowchart of a re-synchronization routine for a video decoder according to one embodiment of the present invention;
Figure 11 is a functional block diagram of a multimedia communication quality analysis system that includes a video bitstream quality analysis sub-system according to one embodiment of the present invention;
Figure 12 is an exemplary flowchart of a video decoding and loss analysis routine that can be performed by the video bitstream quality analysis sub-system of Figure 11;
Figure 13 is a graphical representation of the manner in which quality metrics can be displayed by the video bitstream quality analysis sub-system of Figure 11;
Figure 14 is a functional block diagram of a multimedia communication quality analysis system that includes an audio bitstream quality analysis sub-system according to another embodiment of the present invention;
Figure 15 is an exemplary flowchart of an audio decoding and loss analysis routine that can be performed by the audio bitstream quality analysis sub-system of Figure 14;
Figure 16 is a functional block diagram of a multimedia communication quality analysis system that can assess the quality of both audio and video data in a multimedia bitstream according to another embodiment of the present invention;
Figure 17 is a functional block diagram of multimedia communication quality analysis system according to another embodiment of the present invention that can simulate errors in an encoded multimedia bitstream and adjust encoding and other parameters to alter the quality of reconstructed output data;
Figure 18 is an exemplary flowchart of a multimedia communication quality analysis routine that can be performed by the multimedia communication quality analysis system of Figure 18;
Figure 19 is a functional block diagram of a multimedia communication quality analysis system that can decode and assess the quality of audio data contained in an INTERNET telephony communication according to another embodiment of the present invention; and
Figure 20 is an exemplary flowchart of an audio decoding and loss analysis routine that can be performed by the audio bitstream quality analysis sub-system of Figure 19.

In the drawings, like reference numerals indicate like or functionally similar elements or method steps and the left-most one or two digits of a reference numeral identifies the drawing in which the reference numeral first appears.

In the described embodiments, a decoder is provided for decoding audio, video, and multimedia bitstreams that are encoded according to any of a number of audio and/or video compression schemes, such as MPEG 1, 2, or 4, H.261, H.263, G.711, G.72x, etc. In one embodiment of the present invention, the decoder detects data loss or corruption in the bitstream prior to fully decoding that bitstream. This embodiment is ideally suited for decoding digitally encoded audio and/or video communications received over a switched packet network, such as digital TV over satellite, digital TV over cable, digital TV over terrestrial broadcasting, audio (e.g., voice) and/or video over IP, audio and/or video over ATM, etc.

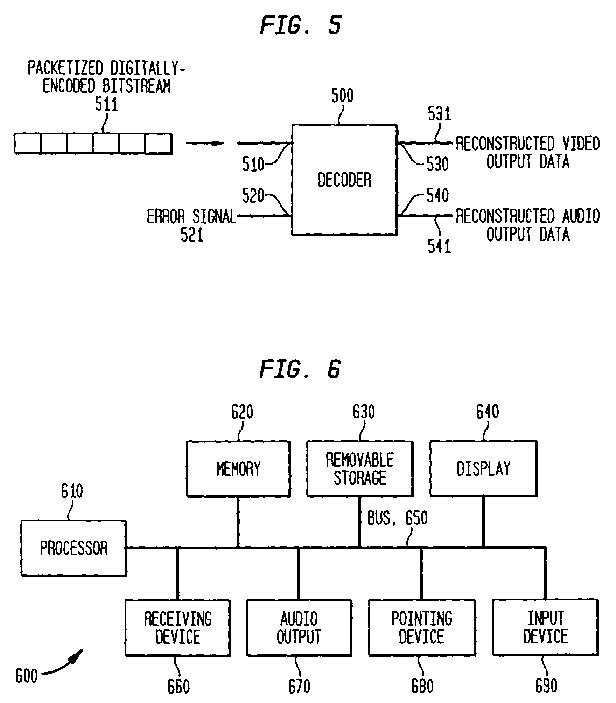

Figure 5 is a high level block diagram of a decoder according to one aspect of the present invention. Decoder 500 decodes packetized, digitally-encoded audio, video, and multimedia bitstreams and generates reconstructed audio and/or video output data for display, storage or analysis, as described further below. As described further below, decoder 500 can be implemented as an MPEG audio decoder, an MPEG video decoder, or an MPEG multimedia decoder that is used to decode an MPEG-2 transport stream that includes MPEG audio data, MPEG video data, or MPEG audio and video data, respectively. Alternatively, decoder 500 can be implemented as an audio decoder, a video decoder, or multimedia decoder that is used to decode other compressed audio, video, or audio and video bitstreams (e.g., H.263, G.723.1) received using different network protocols, such as RTP/UDP that is used in INTERNET telephony.

As shown in Figure 5, decoder 500 includes two inputs 510, 520 and one or more outputs 530, 540. For example, output 530 can be used to provide reconstructed video output data 531, and output 540 can be used to provide reconstructed audio output data 541. It should be appreciated from the instant disclosure that embodiments of the decoder 500 can decode an audio bitstream only or, alternatively, decode a video bitstream only. In such embodiments, only a single output (530 or 540) is provided.

Decoder 500 includes two inputs: a first input 510 to receive a packetized, digitally-encoded audio, video, or multimedia bitstream 511, in packets, and a second input 520 to receive an error signal 521 that corresponds to each received packet. In one illustrative embodiment, the error signal 521 is provided by a receiving device interposed between the decoder 500 and the switched packet network (e.g., receiving device 175 of Figure 1), although the present invention is not so limited. It should be noted that many receiving devices (e.g., 175 in Figure 1) are capable of providing an error signal in response to an erroneous packet. However, Applicants are not aware of this error signal previously being provided to a decoder, nor are they aware of any decoder previously actually making use of the information conveyed by this error signal. Receipt of the error signal 521 at this second input 520 alerts the decoder 500 to the presence of lost or corrupted data in each received packet prior to the actual decoding of the audio and/or video bitstream data contained therein. This advanced knowledge enables the decoder 500 to provide new and useful features (described below), in addition to decoding.

For example, in one embodiment, the decoder 500, having identified the presence of data loss or corruption in the received bitstream, implements error concealment techniques to limit the impact of data loss or corruption on the reconstructed audio or video output data. Such error concealment techniques may include spatial interpolation and/or temporal interpolation, among others, as well known to those of ordinary skill in the art. This advance knowledge of data loss or corruption also permits the decoder 500 to reliably resynchronize to the next available syntactic unit of information (e.g., slice header, picture header, GOP header, etc.) in the bitstream that does not include lost or corrupted data. It should be appreciated that in a conventional decoder, such re-synchronization is not always possible, as lost or corrupted data may not be detected until well after the next available resynchronization point has occurred. Furthermore, it should be appreciated that alternative embodiments of the decoder of the present invention perform both error concealment and early re-synchronization, as well as a number of other functions described further below.

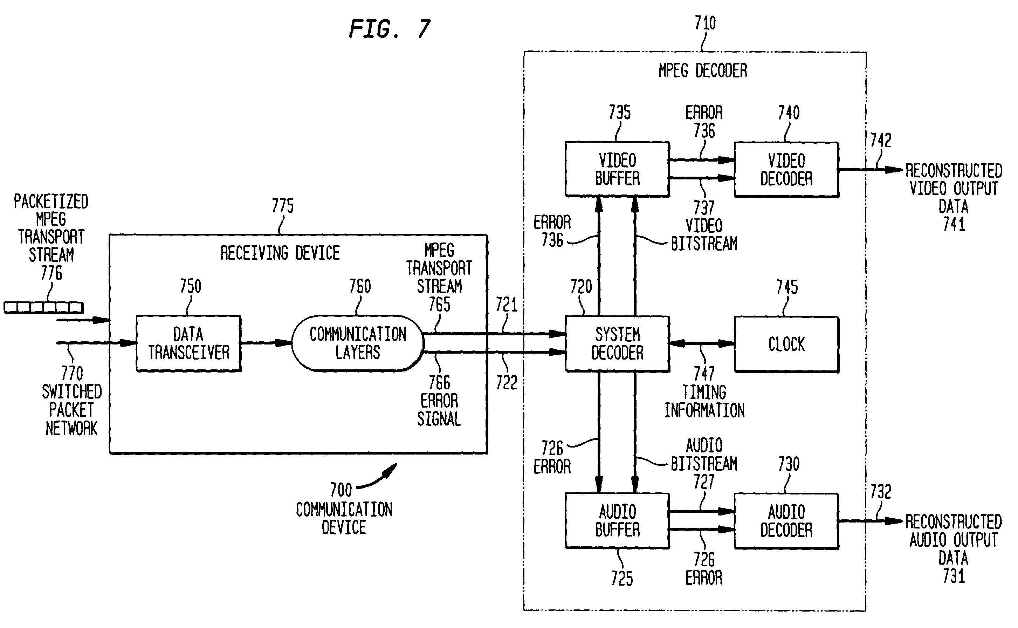

Figure 6 illustrates an exemplary computer platform in which embodiments of the present invention can be implemented. The computer 600 includes a processor 610, a memory 620, a removable storage device 630, a display 640, an audio output device 670, a pointing device 680, and an input device 690, all coupled together via a bus 650. It should be understood that computer platform 600 is shown merely for illustrative purposes, and that the present invention is not limited to use with a system having this specific configuration, as other configurations are possible. For example, the memory 620 may consist of memory devices such as hard disk drives or optical disk drives, RAM, ROM, or other memory devices and combinations thereof. The removable storage device 630 may be a CD-ROM drive, a tape drive, or a diskette drive and can be used to load application software including software to implement various embodiments of the present invention described herein. The display 640 may be a CRT screen, or similar device, that allows video data to be displayed, and the audio output device 670 may include one or more speakers, as known in the art. Pointing device 680 may, for example, be a puck, joystick, trackball, or mouse, and input device 690 may include a keyboard that allows a user to interact with the system. Also shown in Figure 6 is a receiving device 660 that is operatively coupled to the bus 650. The receiving device 660 may, for example, include a data transceiver to receive communications that include encoded audio, video, or multimedia data, as well as firmware, software, or hardware to implement a single communication protocol, or a number of different communication protocols.

Software, including code that implements embodiments of the present invention, may be stored on some type of removable storage media such as a CD-ROM, tape, or diskette, or other computer readable medium appropriate for the implemented memory 620 and removable storage device 630. The software can be copied to a permanent form of storage media on the computer 600 (e.g., a hard disk) to preserve the removable storage media for back-up purposes. It should be appreciated that in use, the software is generally and at least partially stored in RAM, and is executed on the processor 610. Various embodiments of the present invention can also be implemented exclusively in hardware, or in a combination of software and hardware. For example, the decoder 500 can be implemented in a dedicated digital signal processor (DSP), such as a C-40 DSP from Texas Instruments. Accordingly, it should be appreciated that the use of a general purpose computer is exemplary only, as the present invention is not limited to such an implementation.

Figure 7 is a functional block diagram illustrating a multimedia communication device according to one embodiment of the present invention. In this exemplary embodiment, decoder 500 (Figure 5) is implemented as an MPEG decoder 710 to decode an MPEG transport stream and provide reconstructed audio and video output data. As illustrated, the MPEG decoder 710 is implemented in a communication device 700 for receiving a packetized MPEG transport stream 776 over a switched packet network 770. In one exemplary implementation, the MPEG decoder 710 is implemented in software on a general purpose computer executing under the control of a well-known operating system such as the Windows NT™ operating system. Such an implementation of the MPEG decoder 710 is preferably based on the well-documented MPEG System Target Decoder (STD) standard. Alternatively, the MPEG decoder 710 can also be implemented in hardware, or in a combination of software and hardware, as known to those skilled in the art. For example, the decoder can be based upon a dedicated digital signal processor (DSP), such as a C-40 DSP from Texas Instruments, as mentioned above with respect to Figure 5.

Multimedia communication device 700 includes a receiving device 775 that is operatively coupled to a switched packet network 770 and an MPEG decoder 710. In one exemplary embodiment, the receiving device 775 operates at the physical through presentation communication layers (e.g., layers 1-6 of the OSI reference model) of the communication device 700, and the MPEG decoder 710 operates at the application layer (e.g., layer 7 of the OSI reference model) of the communication device 700. It should be understood that other implementations may be used, as known by those skilled in the art. Furthermore, as used herein, the term "switched packet network^{"} is used to define any type of communication network that is capable of transmitting and receiving digital audio and/or video data in a number of fixed length packets, where each packet contains a predetermined amount (e.g., bytes) of information. The amount of information in each packet will vary dependent on the type of switched packet network (e.g., ATM, IP, etc), as known by those skilled in the art.

As shown in Figure 7, the receiving device 775 includes a data transceiver 750 to receive a packetized MPEG transport stream 776 from the switched packet network 770. The receiving device 775 also includes a plurality of communication layers 760 for providing an extracted MPEG transport stream 765 to the MPEG decoder 710. Depending on the type of switched packet network 770 over which the packetized MPEG transport stream 776 is transmitted, data transceiver 750 may be a coaxial or fiber optic data transceiver, a microwave or RF data transceiver, etc. Similarly, the plurality of communication layers 760 between the physical layer of the data transceiver 750 and the application layer of the MPEG decoder 710 can vary depending upon the type of switched packet network 770 and the type of data link, network, transport, and session layers used by the receiving device 775, as known to those skilled in the art.

Receiving device 775 extracts the MPEG transport stream 765 from the packetized MPEG transport stream 776, and provides the extracted MPEG transport stream 765 to input 721 of the MPEG decoder 710, preferably in fixed length MPEG transport stream packets (e.g., 188 bytes). The receiving device 775 (e.g., the plurality of communication layers 760) performs error detection and correction operations in a manner well known in the art. The particular layer(s) of the plurality of communication layers 760 at which error detection and/or correction is performed will vary depending on the type of switched packet network 770 over which the packetized MPEG transport stream 776 is received, as known to those skilled in the art.

MPEG decoder 710 includes an input 721 to receive the MPEG transport stream 765 from the plurality of communication layers 760 of the receiving device 775. Output 732 provides reconstructed audio output data 731, and output 742 provides reconstructed video output data 741, each being reconstructed from data contained within the MPEG transport stream 765. The MPEG decoder 710 also includes a second input 722 for receiving an error signal 766 from the plurality of communication layers 760 of the receiving device 775. When an un-recoverable error is encountered by the receiving device 775, that is, an error that cannot be corrected by the receiving device 775, an indication that an error has occurred is provided to the MPEG decoder 710 when the corresponding transport stream packet is provided to the MPEG decoder 710.

In the illustrative embodiment shown in Figure 7, MPEG decoder 710 includes a system decoder 720, an audio buffer 725, a video buffer 735, an audio decoder 730, a video decoder 740, and a clock 745. Embodiments of the MPEG decoder 710 may also include a buffer (not shown) for temporarily storing MPEG transport stream packets prior to delivering them to the system decoder 720. The use of a buffer for temporarily storing MPEG transport stream packets is well known to those skilled in the art, and thus, its detailed description is omitted herein. It should be appreciated that MPEG decoder 710 may include multiple audio and video decoders, as well as multiple audio and video buffers. Typically a separate audio and video buffer is provided for each audio and video decoder in the MPEG decoder. Moreover, although the audio and video buffers 725, 735 are depicted as separate buffers in Figure 7, it should be appreciated that they may alternatively be implemented as different memory regions of a single buffer, and in other ways known to those skilled in the art.

System decoder 720 receives the MPEG transport stream 765 from the receiving device 775 and demultiplexes or parses the MPEG transport stream 765 to separate an audio bitstream 727, a video bitstream 737, and timing information 747 from the MPEG transport stream 765. Timing information 747 separated from the MPEG transport stream 765 includes the Program Clock Reference (PCR) and the Decoding and Presentation Time Stamps (PTS, DTS). The system decoder 720 provides the separated audio and video bitstreams 727, 737 (containing compressed audio and video data), in frames, to the audio buffer 725 and the video buffer 735, respectively, for subsequent removal and decoding by the audio decoder 730 and the video decoder 740, respectively. Timing information 747 allows the system decoder 720 to control the rate at which the separated audio and video bitstreams 727, 737 are provided to the audio and video buffers 725, 735 so that the audio and video decoders 730, 740 can remove and decode their respective bitstreams at the time identified in the decoding time stamp (DTS). The audio decoder 730 and the video decoder 740 decode the audio and video bitstreams 727, 737 at the time identified in the decoding time stamp to provide reconstructed audio and video output data 731, 741, respectively.

In contrast to a conventional MPEG decoder, the system decoder 720 provides an error signal 726, 736 to the audio and video buffers 725, 735 that indicates whether data loss or corruption is present in the separated audio or video bitstreams 727, 737. Because the audio and video bitstreams 727, 737 contained within the MPEG transport stream 765 are received from the receiving device 775 in separate MPEG transport stream packets, the system decoder 720 can identify whether the lost or corrupted data corresponds to the audio bitstream 727 or the video bitstream 737. When data loss or corruption is present in a TS packet that corresponds to the audio bitstream 727, error signal 726 is asserted, and when data loss or corruption is present in a TS packet that corresponds to the video bitstream 737, error signal 736 is asserted. Error signals 726, 727 are provided to the audio and video decoders 730, 740, when the audio and video decoders remove the separated audio and video bitstreams 727, 737 from their respective buffer. Based on this information, the audio and video decoders 730, 740 are alerted to the presence of errors within their respective bitstream prior to the actual decoding of that bitstream by the audio and video decoders 730, 740.

Although error signals 726, 736 are shown as individual signals communicated to the audio and video buffers 725, 735 and to the audio and video decoders 730, 740, it should be appreciated that they may be implemented in any number of ways so that the audio and video decoders 730, 740 can associate the error signals with the particular portion of the audio and video bitstream 727, 737 containing the error. For example, error signals 726, 736 may alternatively be provided directly from the system decoder 720 to the audio and video decoders 730, 740, rather than via the audio and video buffers 725. Thus, it should be appreciated that the present invention is not limited to the particular implementation shown in Figure 7. In this regard, the present invention encompasses any implementation in which the audio and video decoders 730, 740 are alerted to the presence of an error in their respective bitstream 727, 737 not later than the actual decoding of that portion of the bitstream containing the error.

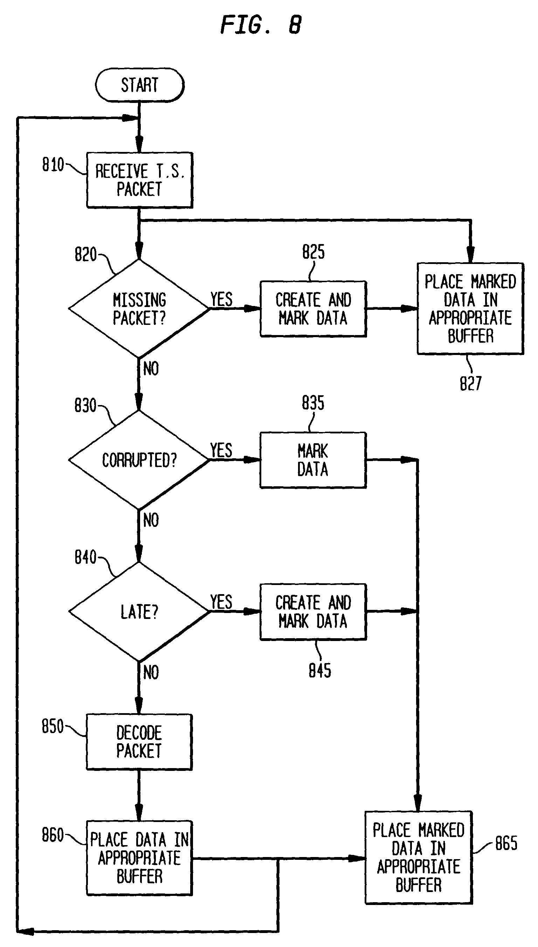

In one embodiment, the presence of lost, corrupted, or delayed data in the audio and video bitstreams 727, 737 is communicated to the audio and video decoders 730, 740 by marking the audio or video bitstream data to indicate the presence of erroneous data therein. That is, error signals 726, 726 are provided to the audio and video buffers 725, 735 and the audio and video decoders 730, 740 within the separated audio and video bitstreams 727, 737 themselves. In this embodiment, the separated audio and video bitstream data provided to the audio and video buffers 725, 735 is modified by the system decoder 720 to identify whether that bitstream data includes erroneous data. All audio and video bitstream data that is received in a packet accompanied by an error signal 722 is marked by the system decoder 720 as potentially including erroneous data, as described further below with respect to Figure 8.

As should be appreciated from the foregoing description, whether by marking erroneous data within a respective audio or video bitstream 727, 737, or by providing an error signal 726, 727, the system decoder 720 alerts the audio and video decoders 730, 740 to the presence of errors in the audio and video bitstreams 727, 737 prior to decoding by the audio and video decoders 730, 740. In one embodiment of the present invention, upon receipt of such advanced notification of an error within their respective bitstreams 727, 737, the audio and video decoders 730, 740 are constructed and arranged to await the next syntactic unit of audio or video bitstream data tat does not include erroneous data to resume decoding. In this embodiment, only error-free reconstructed audio and video output data 731, 741 is output by the decoder 710; bitstream data that is marked as including erroneous data or bitstream data that is associated with error signals 726, 736 is simply discarded by the audio and video decoders 730, 740. In the absence of such an indication of an error in their respective bitstreams, the audio decoder 730 and the video decoder 740 decode their respective audio and video bitstreams 727, 737 in a conventional manner to provide reconstructed audio and video output data 731, 741.

In another embodiment of the present invention, upon receipt of such advance notification of an error within their respective bitstreams 727, 737, the audio and video decoders 730, 740 again await the next syntactic unit of audio or video bitstream data that is not marked or associated with an error signal 726, 736. However, in this embodiment, in addition to awaiting the next syntactic unit of audio or video bitstream data to resume decoding, the audio and video decoders 730, 740 also implement error concealment techniques that reduce adverse effects of erroneous data on the reconstructed audio or video output data 731, 741. Such error concealment techniques can, as known by those skilled in the art, be based on spatial and/or temporal interpolation of data and on prior syntactic information that was not lost, delayed, or corrupted, and on semantic information (e.g., DCT coefficients, motion vectors, etc.) that does not appear to contain lost or corrupted information, etc.

Although the MPEG decoder 710 has been described as receiving an error signal 766 from the receiving device 775 that indicates the presence of lost or corrupted data within an extracted TS packet, it should be appreciated that this error indication may be provided by other than the receiving device 775. It should further be appreciated that the present invention is not limited to a system decoder 720 that receives an error signal from a receiving device 775, as embodiments of the system decoder 775 can also detect such errors. Thus, the ability to detect errors at a communication layer lower than that of the MPEG decoder 710 is optional, as the present invention embraces any system decoder that is capable of alerting an audio or video decoder to the presence of errors within an audio or video bitstream prior to the actual decoding of that audio or video bitstream. For example, even when an error signal is not provided to the system decoder 720, the system decoder 720 can still detect late or corrupted TS packets based on the syntax of the received bitstream 765. Moreover, the system decoder of the present invention can also detect lost transport stream packets based on the syntax of the received bitstream. But, in contrast to a conventional decoder, system decoder 720 notifies the appropriate audio or video decoder 730, 740 of any detected errors in the bitstream. As in the previously described embodiment, the advanced notification can be used by the audio and video decoder 730, 740 to permit early re-synchronization, to perform error concealment techniques, etc.

Figure 8 is an exemplary flowchart that depicts the operation of the system decoder 720 according to one illustrative embodiment of the present invention. At step 810, the system decoder 720 receives a transport stream (TS) packet 201 provided by a receiver (e.g., receiving device 775) directly or through accessing an intermediate buffer. At step 820, a determination is made as to whether a TS packet 201 is missing (that is, has been lost completely). In one embodiment, this is determined from a continuity counter within the packet header 202 of the received TS packet 201. For example, when a TS packet 201 received at step 810 (e.g., packet 20) has a continuity counter value that is more than incrementally greater than the preceding received packet (e.g., packet 18), the system decoder 720 determines that the immediately preceding packet (e.g., packet 19) has been lost. Multiple lost packets are detected in a similar manner.

When it is determined at step 820 that a packet has been lost, the system decoder 720 proceeds to step 825, wherein the system decoder creates a frame of data and marks the frame data to indicate to the audio decoder 730 or the video decoder 740 that the information contained therein is in error. It should be appreciated that the data created at step 825 can have any value. However, the amount of data created should be the same as the amount of data that was lost, for reasons described further below. It should further be appreciated that the data created at step 825 can be marked on a frame by frame basis, or at a smaller level of granularity. In one embodiment, each byte of audio and video bitstream data 727, 737 has an associated marker bit that indicates whether that byte of data contains errors. The associated marker bit is set to a particular value (e.g., one) to indicate that the corresponding byte contains an error, and is cleared (e.g., set to zero) or simply not set when that byte does not contain an error. When such marked bitstream data is received by the audio or video decoder 730, 740, the audio or video decoder is alerted to the presence of errors in the bitstream, and can take appropriate measures, as described further below.

After creating and marking the data, the system decoder 720 proceeds to step 827, wherein the created and marked data at step 825 is placed into the appropriate audio or video buffer 725, 735. Thus, as described further below, when the audio or video decoder 730, 740 later decodes this frame of data, a buffer underflow condition is avoided as the amount of created data equals the amount of bitstream data that was lost Furthermore, the marking of the created data ensures that the audio or video decoder 730, 740 is alerted to the presence of erroneous data prior to performing any decoding. After placing the marked data into the appropriate audio or video buffer at step 827, the system decoder 720 returns to processing the received packet of data. It should be appreciated that when more than one packet of data is determined to be lost, the system decoder 720 will perform steps 825 and 827 for each lost packet of data.

Alternatively, when it is determined at step 820 that a packet has not been lost, the system decoder 720 proceeds to step 830. At step 830, a determination is made as to whether the received TS packet 201 includes data that has been corrupted. As in a conventional system decoder, this may be determined by comparing the packet level information to that allowed by the MPEG standard. When the TS packet 201 is corrupted (i.e., when the pack or packet start codes or headers contain information that does not agree with the MPEG standard), the system decoder 720 proceeds to step 835, wherein the system decoder marks the audio or video data contained therein as containing possibly erroneous data. After marking the audio or video data as containing possibly erroneous data, the system decoder 720 proceeds to step 865. At step 865, the system decoder 720 places the marked data into the appropriate audio or video buffer, and returns to step 810 to receive the next TS 201 packet of bitstream data.

As should be appreciated by those skilled in the art, and as described with respect to Figure 2, in the absence of any error indicator, the system decoder 720 can only detect errors in the received TS packet 201 when those errors are present in the packet level information. However, where the system decoder 720 is capable of also receiving an error indicator, for example, from the receiving device 775 in Figure 7, the system decoder 720 can also detect lost or corrupted audio or video data contained in PES packet data 214. Specifically, when the syntax of the packet level information agrees with the applicable standard but an error signal 766 has been provided to the system decoder 720, the system decoder determines that the error must have necessarily occurred within the enclosed audio or video bitstream 727, 737. Upon the determination that the error occurred within the enclosed audio or video bitstream 727, 737, the system decoder 720 again proceeds to step 835, and marks the audio or video bitstream data contained therein as containing possibly erroneous data. After marking the corrupted data at step 830, the system decoder 720 then proceeds to step 865, wherein the system decoder writes the marked data into the appropriate audio or video buffer 725, 735, and ten returns to step 810 to receive the next TS packet 201 of bitstream data.

Alternatively, when it is determined at step 830 that the TS packet 201 does not appear to be corrupted, the system decoder 720 proceeds to step 840. At step 840, a determination is made as to whether the TS packet 201 has been received too late to be decoded. This determination can be performed by comparing the current value of the system clock 745 to the value of the DTS in the PES packet header 212 (Figure 2), which indicates the time at which the system decoder 720 must decode the packet, as described above with respect to Figure 3. When it is determined that the TS packet 201 has been received too late to be decoded, the system decoder 720 proceeds to step 845, wherein the system decoder creates and marks a frame of data in a manner analogous to tat described above with respect to step 825. It should be appreciated that as far as the reconstructed audio output and video output data 731, 741 is concerned, there is little difference between a packet that is late and one tat is never received (i.e., lost), as the reconstructed audio and video output data cannot be properly reconstructed. After creating and marking the data at step 845, the system decoder 720 proceeds to step 865, wherein the marked data is placed in the appropriate audio or video buffer 725, 735. After placing the marked data in the appropriate buffer 725, 735 at step 865, the system decoder 720 returns to step 810, wherein the next TS packet 201 is received and processed.

Alternatively, when it is determined at step 840 that a TS packet 201 has been received in time for decoding and is not corrupted, the system decoder 720 proceeds to step 850. At step 850, the system decoder 720 decodes the TS packet 201 based on the packet level information to separate the audio or video bitstreams 727, 737 contained within the TS packet 201. After separating out the audio or video bitstreams 727, 737, processing proceeds to step 860, wherein the system decoder 720 places the separated audio or video bitstreams 727, 737, frame by frame, into the appropriate audio or video buffer 725, 735 for subsequent decoding by either the audio or video decoder 730, 740 at a time dictated by the DTS. The system decoder 720 then returns to step 810, wherein the next TS packet 201 is received and processed.

In contrast to the conventional decoders, the system decoder of the preferred embodiment does not simply discard the entire packet of data when an error is detected. Rather, it alerts the audio or video decoder to the presence of errors in the bitstream prior to decoding by the audio or video decoder. As should be appreciated by those skilled in the art, the advance warning provided by the system decoder to the audio and video decoders permits more robust operation of the audio and video decoders in the presence of errors. Specifically, because the audio and video decoders are alerted to the presence of errors prior to decoding their respective bitstreams, unrecoverable errors that would crash a conventional audio or video decoder are avoided. In addition, re-synchronization at an early point is facilitated, as the delayed discovery of errors by the audio or video decoder is avoided.

In further contrast to a conventional system decoder, the system decoder, in cooperation with the audio and video decoders, ensures that error-free bitstream data received after an error is not misinterpreted by the audio or video decoder. Specifically, when a TS packet is received too late to be decoded, or when it is determined that a TS packet has been lost, the system decoder creates "filler" data (e.g., at steps 825 and 845) and places that filler data in the appropriate audio or video buffer. Thus, when the audio or video decoder retrieves the next frame of bitstream data from the buffer, buffer underflow errors are avoided, and future frames of bitstream data are not prematurely decoded or misinterpreted. It should be appreciated that if a TS packet arrives after it has already been determined to be lost, that TS packet can be simply discarded by the system decoder, as its loss has already been accounted for.

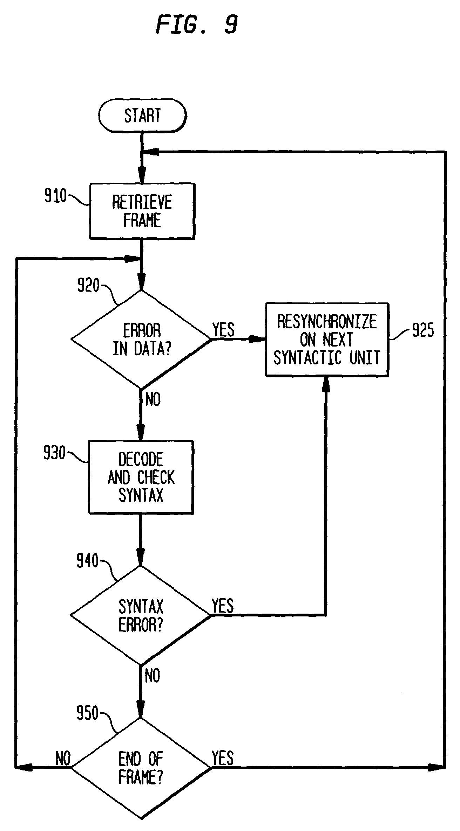

Figure 9 illustrates a flowchart indicative of the operation of audio or video decoders 730, 740 according to one embodiment of the present invention. As noted above with respect to Figure 8, regardless of whether an error was detected in the received bitstream, the system decoder 720 places bitstream data, frame by frame into a buffer 725, 735 for subsequent decoding by the appropriate audio decoder 730 or video decoder 740. Where errors are detected in the audio or video bitstream 727, 737 by the system decoder 720, the bitstream data that is placed into the appropriate buffer 725, 735 is marked to indicate that it is potentially erroneous. Alternatively, when no errors are detected by the system decoder 720, separated audio or video bitstream data is placed into the appropriate buffer 725, 735 in a conventional manner and the appropriate marker bits are either cleared (e.g., set to a value of zero) or simply not set. Regardless of the type of data actually written into the buffer (i.e., error-free bitstream data, corrupted bitstream data, or bitstream data that was created as a result of lost or delayed bitstream data), this operation of the system decoder 720 avoids the possibility of a buffer underflow condition in the audio and video decoders 730, 740.

As shown in Figure 9, to decode an audio or video bitstream 727, 737, the audio or video decoder 730, 740 receives a frame of bitstream data from the system decoder 720 (such as, for example by retrieving the frame of bitstream data from the appropriate audio or video buffer 725, 735) at step 910, and proceeds to step 920. At step 920, the audio or video decoder 730, 740 examines a first portion of the frame of audio or video bitstream data to determine whether that bitstream data includes erroneous data. As noted above, in one embodiment of the present invention, this is determined by examining marker bits associated with each byte of that portion of the bitstream data. When it is determined at step 920 that the bitstream data is erroneous, the audio or video decoder 730, 740 proceeds to step 925, wherein the decoder enters a re-synchronization mode. As described further below, in the resynchronization mode the audio or video decoder 730, 740 searches the audio or video bitstream data for the next syntactic unit of information that is not accompanied by marker bits indicating that the data is invalid. The next syntactic unit of bitstream data will typically be at the same level of the MPEG syntax, or the next syntactic level thereabove. Once this error-free bitstream data is found, the audio or video decoder 730, 740 continues decoding in a conventional manner. For example, where the video decoder is an MPEG video decoder and slice data or a slice header has been lost or corrupted, the video decoder 740 searches for the next slice header data that is not accompanied by a set marker bit to resume decoding. It should be appreciated that dependent upon what data was affected by the error, the next syntactic unit of information may instead be a picture, a group of pictures, or another sequence, rather than a slice.

Alternatively, when it is determined that no data in the first portion of the frame of bitstream data is accompanied by a set marker bit, the audio or video decoder 730, 740 proceeds to step 930. At step 930, the audio or video decoder 730, 740 decodes the first portion of bitstream data in the frame of audio or video bitstream data and checks the syntax of the audio and video bitstreams 727, 737 to detect the presence of lost or corrupted bitstream data. It should be appreciated that the checking of the syntax of the audio and video bitstreams 727, 737 is not necessary where the system decoder 720 is capable of detecting errors in the underlying audio or video bitstream data based upon the receipt of an error signal (e.g., error signal 766) from another device, such as the receiving device 775 of Figure 7. When it is determined that a syntax error has occurred in the audio or video bitstreams 727, 737, the audio or video decoder 730, 740 proceeds to step 925, wherein the decoder enters the re-synchronization mode.

Alternatively, when no errors in the syntax of the audio or video bitstreams 727, 737 are detected at step 940, the audio or video decoder 730, 740 proceeds to step 950, wherein the decoder determines whether the end of the frame of audio or video bitstream data has been reached. When it is determined that the end of the frame has not been reached, the audio or video decoder 730, 740 returns to step 920 wherein the next portion of data in the frame of audio or video bitstream data is decoded. Alternatively, when it is determined at step 950 that the end of the frame of audio or video bitstream data has been reached, the audio or video decoder 730, 740 returns to step 910 to process the next frame of audio or video bitstream data.

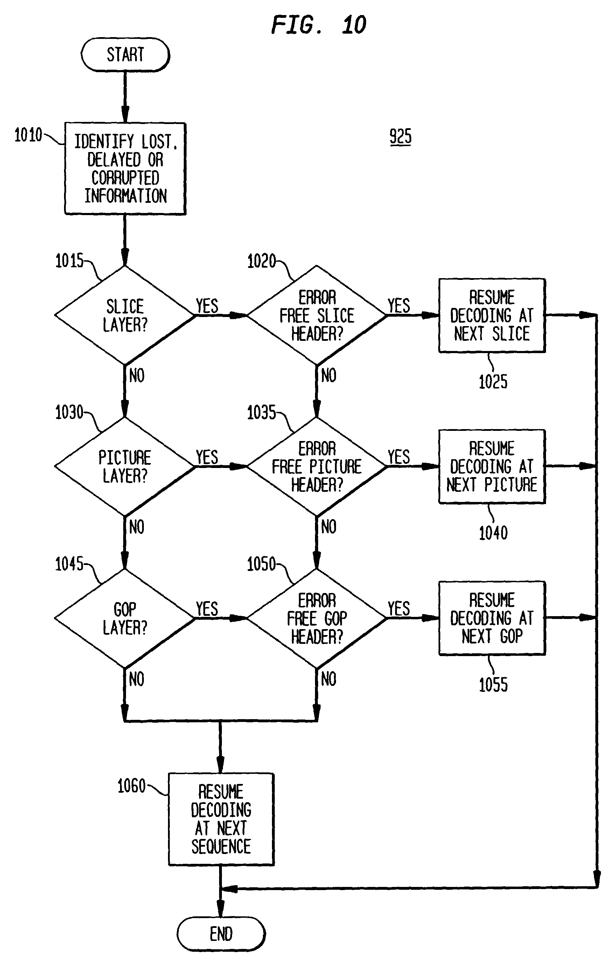

Figure 10 is an exemplary illustration of a re-synchronization routine for a video decoder 740 according to one embodiment of the present invention. The re-synchronization routine is preformed whenever an error is detected by the video decoder 740. As described above with respect to step 904 (Figure 9), the detection of an error in the video bitstream 737 may be based upon the syntax of the video bitstream 737, or upon an error indication 736 provided to the video decoder 740 from the system decoder 720, or upon the value of marker bits associated with the video bitstream 737. Upon detection of an error in the video bitstream 737, the video decoder 740 enters the re-synchronization routine 925 and proceeds to step 1010.

At step 1010, the video decoder 740 identifies which information was lost, delayed (i.e., arrived too late to be decoded), or corrupted. This may be determined in any of a number of ways, as known by those skilled in the art. For example, this identification can be based upon the most recently decoded information that was not lost, delayed, or corrupted (i.e., did not result in a detected error), or upon error-free bitstream data that follows the errant bitstream data, or upon portions of corrupted data that do not themselves appear to be corrupted (e.g., portions of data that include allowed MPEG codewords or syntax), or upon a combination of one or more of the aforementioned techniques, etc. The information that was lost, corrupted, or delayed may pertain to the slice layer of coding, the picture layer of coding, the group of pictures layer of coding or the sequence layer of coding. After identifying which information was lost, delayed or corrupted, the re-synchronization routine proceeds to step 1015.

At step 1015, a determination is made as to whether the information that was identified as lost, delayed, or corrupted relates to the slice layer of coding. Information relating to the slice layer may include slice header data, actual slice data, such as DCT coefficients, motion vectors, etc. When it is determined that the information that was lost, delayed, or corrupted is related to the slice layer of coding, the re-synchronization routine proceeds to step 1020. At step 1020, the video decoder 740 examines the video bitstream data retrieved from the video buffer 735 and searches for the next slice header that is not associated with a detected error to resume decoding of the video bitstream 737. When error-free slice header data is encountered, the re-synchronization routine proceeds to step 1025, wherein the video decoder 740 resumes decoding at the next slice of video bitstream data. It should be appreciated that depending upon where the error occurred in the video bitstream 737 and the extent of erroneous video bitstream data, the next error-free syntactic unit of information may not be a slice. For example, where the last slice of a picture contains erroneous video bitstream data, the next error-free syntactic unit of video bitstream data may be a picture header, a GOP header, or a sequence header. Thus, when the next error-free syntactic unit of video bitstream data is not a slice header, the re-synchronization routine proceeds to step 1035, described further below.

When it is determined at step 1015 that the identified information does not relate to the slice layer of coding, the re-synchronization routine proceeds to step 1030. At step 1030, a determination is made as to whether the information identified as being lost, delayed, or corrupted at step 1010 relates to the picture layer of coding. Such information can include, for example, a picture header that is lost, delayed, or corrupted. When it is determined at step 1030 that the information that was lost, delayed, or corrupted relates to the picture layer of coding, the re-synchronization routine proceeds to step 1035. At step 1035, the video decoder 740 examines the video bitstream data retrieved from the video buffer 735 and searches for the next picture header that is not associated with a detected error to resume decoding of the video bitstream 737. When error-free picture header data is encountered, the resynchronization routine proceeds to step 1040 wherein the video decoder 740 resumes decoding at the next picture of video bitstream data. It should be appreciated that depending upon where the error occurred in the video bitstream 737 and the extent of erroneous video bitstream data, the next error-free syntactic unit of information may not be a picture. For example, where the last picture header in a group of pictures contains erroneous video bitstream data, the next error-free syntactic unit of video bitstream data may be a GOP header, or a sequence header. Thus, when the next error-free syntactic unit of video bitstream data is not a picture header, the re-synchronization routine proceeds to step 1050, described further below.

Alternatively, when it is determined at step 1030 that the information that was lost, delayed, or corrupted is not related to the picture layer, the re-synchronization routine proceeds to step 1045. At step 1045, a determination is made as to whether the information that was identified as being lost, delayed, or corrupted at step 1010 relates to the GOP layer of coding. When it does relate to the GOP layer of coding, for example, where a GOP header is lost, delayed, or corrupted, the routine proceeds to step 1050. At step 1050, the video decoder 740 examines the video bitstream data retrieved from the video buffer 735 and searches for the next error-free GOP header in a manner similar to that described previously for steps 1020 and 1035. When error-free GOP header data is encountered, the re-synchronization routine proceeds to step 1055 wherein the video decoder 740 resumes decoding at the next group of pictures of video bitstream data. It should again be appreciated that depending upon where the error occurred in the video bitstream 737 and the extent of the erroneous video bitstream data, the next error-free syntactic unit of video bitstream data may be a sequence header. Thus, when the next error-free syntactic unit of video bitstream data is not a GOP header, the re-synchronization routine proceeds to step 1060, as described further below.

When it is determined at step 1050 that the next error-free syntactic unit of video bitstream data is not a GOP header, or alternatively, when it is determined at step 1040 that the lost, delayed, or corrupted video bitstream data does not pertain to the GOP layer of coding, then the next error-free syntactic unit of video bitstream data must necessarily pertain to sequence layer of coding, and the routine proceeds to step 1060. At step 1060, the video decoder 760 waits for the next video sequence to resume normal decoding. After any of steps 1025, 1040, 1055, or 1060, the re-synchronization routine terminates.

While waiting for the next error-free syntactic unit of information to resume decoding (e.g., at steps 1020, 1035, 1050, etc.), the video decoder 740 may attempt to decode the erroneous video bitstream data, or may simply discard the erroneous video bitstream data and output nothing. In one embodiment of the present invention, the video decoder 740 simply discards erroneous video bitstream data while waiting for the next error-free syntactic unit of information. Upon re-synchronization to the next syntactic unit of error-free bitstream data, the video decoder 740 resumes providing reconstructed video output data 741. Accordingly, where erroneous video bitstream data is discarded, only error-free reconstructed video output data 741 is provided by the video decoder 740.

In another embodiment, while waiting for the next error-free syntactic unit of information, a determination is made by the video decoder 740 as to whether the nature and extent of the error warrants decoding of the erroneous video bitstream data. This determination may be made, for example, depending on the type of information that is lost, delayed, or corrupted, as well as its extent. For example, where the type of information that is lost, delayed, or corrupted is actual slice data, such as DCT coefficients or motion vectors, and the extent of the error is short in extent (e.g., a few bytes), the video decoder 740 can determine to decode the erroneous bitstream data. In the above example, the decoding of erroneous video bitstream data can be expected to provide reconstructed video output data 741 in which errors are virtually incapable of human perception when presented in real time. Moreover, where the nature and extent of the erroneous video bitstream data is amenable to error concealment techniques, such techniques may be used to further reduce the visual impact of such errors on the reconstructed video output data 741. Alternatively, where the type and extent of video bitstream data that is lost, delayed, or corrupted is more significant, the video decoder 740 can determine that decoding and/or error concealment should not be attempted.

An exemplary re-synchronization routine for an audio decoder 730 is now described according to one embodiment of the present invention. The re-synchronization routine is performed whenever an error is detected by the audio decoder 730. As described above with respect to Figure 9, the detection of an error in the audio bitstream 727 may be based upon the syntax of the audio bitstream 727, or upon an error indication 726 provided to the audio decoder 730 from the system decoder 720, or upon the value of marker bits associated with the audio bitstream 727.

Unlike an MPEG video bitstream which includes multiple headers (e.g., slice headers, picture headers, GOP headers, and sequence headers), each representing a possible resynchronization point within a frame of video bitstream data, an MPEG audio bitstream includes only a single header for each frame of audio bitstream data. Accordingly, in one embodiment of the present invention, when erroneous audio bitstream data is encountered, the re-synchronization routine monitors the audio bitstream 727 for the next error-free audio frame header, and then resumes decoding in a conventional manner from that point on. Thus, in this embodiment, the next error-free syntactic unit of information will be a frame of audio bitstream data, either belonging to the same audio sequence or the next audio sequence. While waiting for the next error-free syntactic unit of information to resume decoding, the audio decoder 730 may attempt to decode the erroneous audio bitstream data, or may simply discard the erroneous audio bitstream data until the next error-free frame.

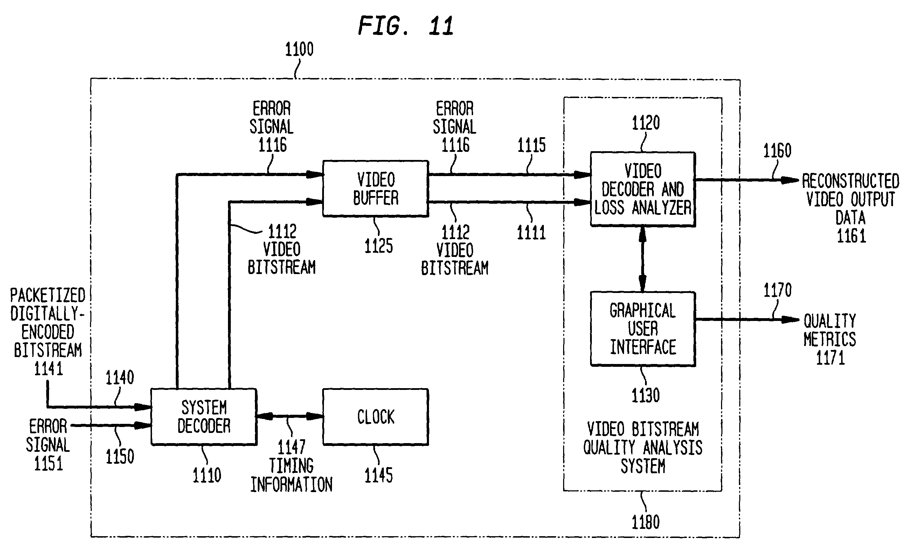

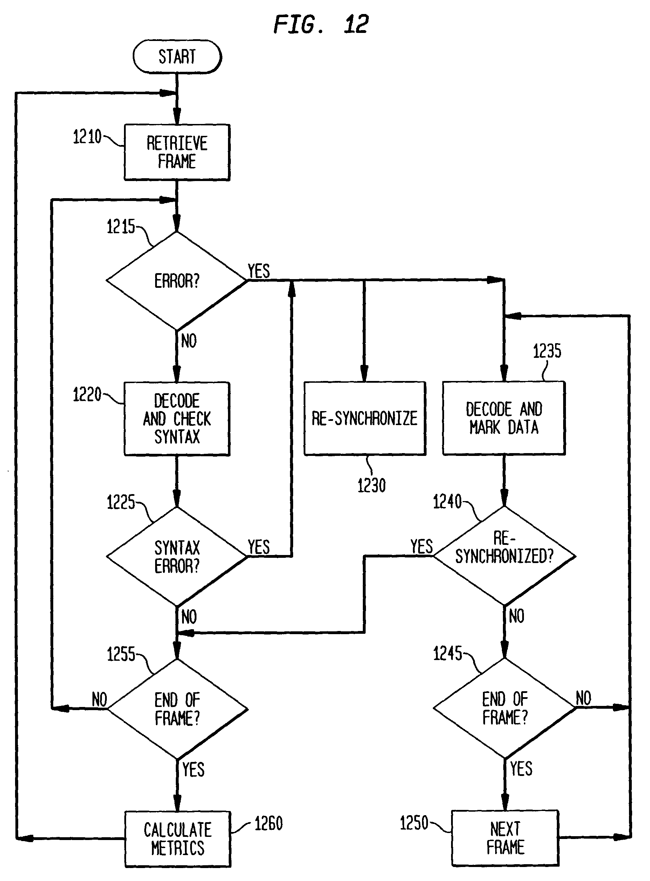

Another embodiment provides a multimedia communication quality analysis system for assessing the quality of compressed multimedia communication. In one embodiment, the multimedia communication quality analysis system is adapted to receive a multimedia communication and assess the quality of that multimedia communication using a variety of metrics. For example, as described in detail below with respect to Figures 11 and 12, one embodiment includes a video bitstream quality analysis subsystem 1180 that is capable of reporting the number of reconstructed samples (e.g., pixels) of video output data that were damaged (i.e., could not be properly reconstructed) due to loss, delay, or corruption at the slice, picture, group of pictures, and sequence level. In this embodiment the number of damaged reconstructed samples of video output data includes both the number of reconstructed samples that were actually lost, delayed, or corrupted, as well as those reconstructed samples of video output data that were predicted or otherwise dependent therefrom. The video bitstream quality analysis sub-system 1180 can also report the number of bytes of video bitstream data lost, delayed, or corrupted, the number of macroblocks lost, delayed or corrupted, and the number and type of headers that were lost, delayed, or corrupted.

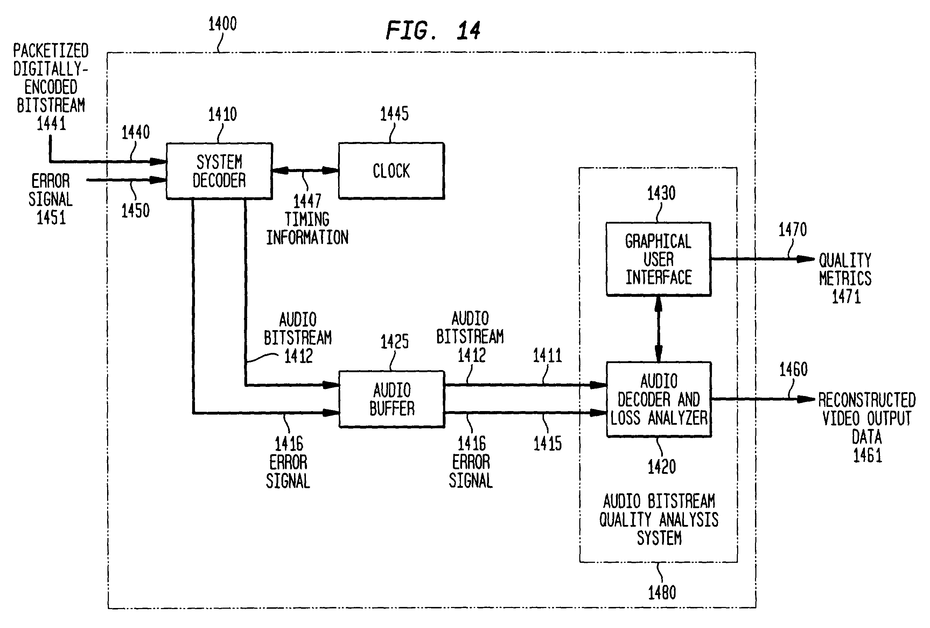

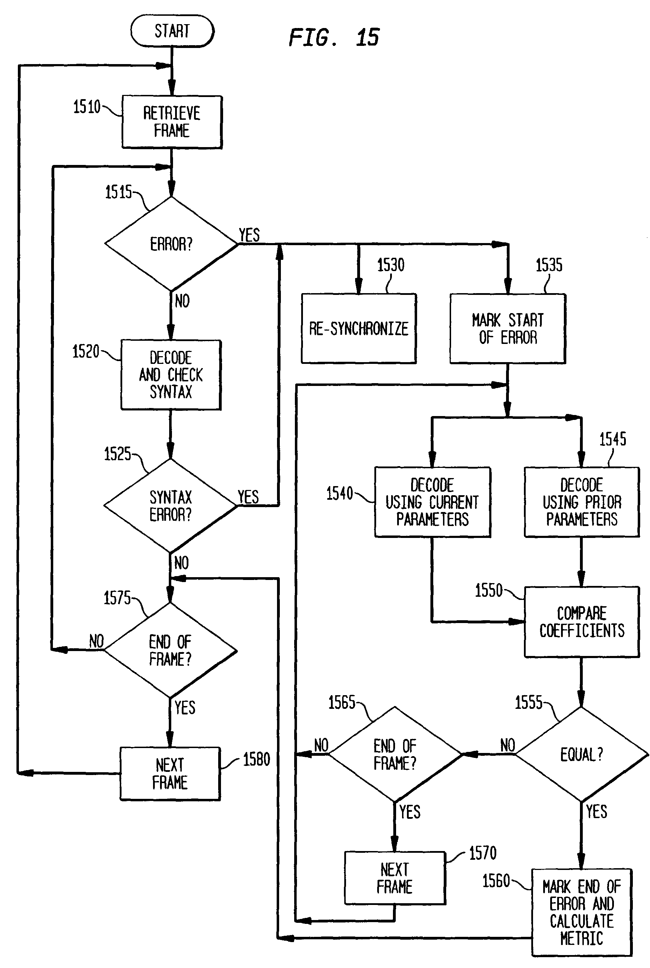

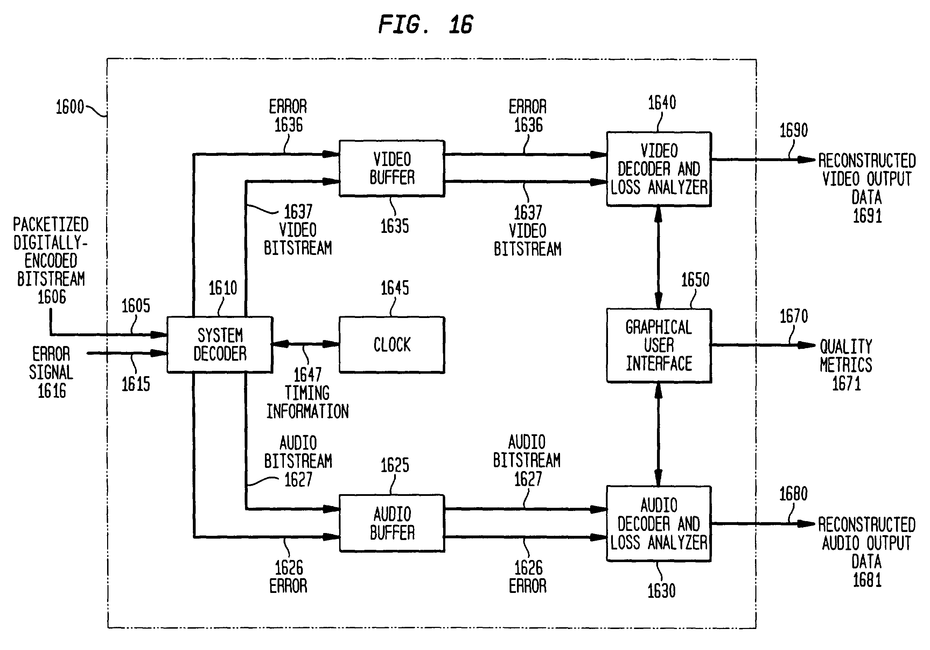

In another embodiment of a multimedia communication quality analysis system, that is described in detail with respect to Figures 14 and 15, an audio bitstream quality analysis sub-system 1480 is provided that reports the number of reconstructed samples of audio output data that were damaged (i.e. could not be properly reconstructed) due to loss, delay, or corruption of an audio bitstream. As in the video bitstream quality analysis sub-system 1180, the number of damaged samples of reconstructed audio output data includes both the number of samples tat were actually lost, delayed, or corrupted, as well as those reconstructed samples of audio output data tat were predicted or otherwise dependent therefrom. In a further embodiment described in detail with respect to Figure 16, both of these aspects are combined to provide an quality analysis system that is capable of reporting this information for both audio and video bitstream data.

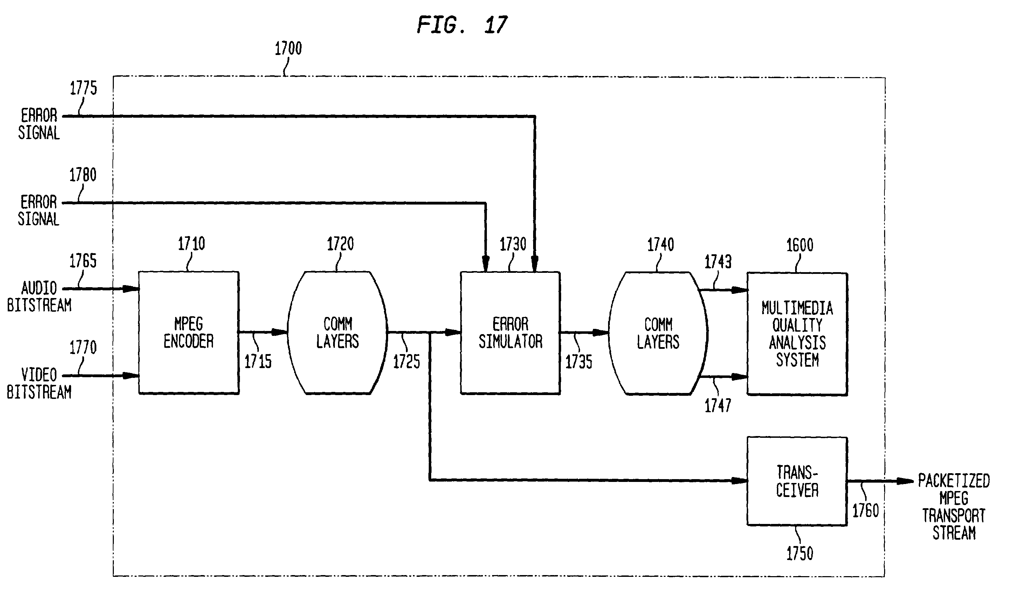

In an embodiment, a multimedia communication quality analysis system is provided that simulates the effects of various types of errors on a digitally compressed multimedia bitstream and provides information indicative of the anticipated quality of reconstructed output data. As described in detail with respect to Figure 17, the quality analysis system 1700 can be used to simulate anticipated error rates for different levels of encoding, to simulate anticipated error rates for the same level of encoding transmitted over different types of communication networks, to simulate anticipated error rates for the same level of encoding transmitted over a particular type of communication network but using different network communication protocols, etc. For example, the quality analysis system 1700 can be used by communication providers, such as broadcasters, to select a level of encoding that, for a particular error rate, optimizes communication bandwidth while ensuring the quality of reconstructed output data is above a predetermined level. Moreover, such a quality analysis system can also be used prior to transmission or broadcasting to identify whether encoding parameters should be modified, or error correcting codes added or omitted to provide a particular level of quality in the reconstructed output data, etc.

Figure 11 illustrates a functional block diagram of a multimedia communication quality analysis system according to one embodiment of the present invention. In this illustrative embodiment, decoder 500 (Figure 5) is implemented as a quality analysis system that is capable of decoding an MPEG transport stream and assessing the quality of reconstructed video output data that can be anticipated therefrom. In one illustrative implementation, the analysis system 1100 is implemented in software on a computer, such as that described in Figure 6. However, it should be appreciated that the present invention is not limited to this implementation, as other implementations may alternatively be used.

As shown in Figure 11, multimedia communication quality analysis system 1100 has a first input 1140 for receiving a packetized digitally-encoded bitstream 1141, such as an MPEG transport stream, and a second input 1150 for receiving an error signal 1151, for example, from receiving device 775 in Figure 7. The analysis system 1100 also has a first output 1160 for providing reconstructed video output data 1161, and a second output 1170 for providing quality metrics 1171 indicative of the quality of the reconstructed video output data 1161. As shown, analysis system 1100 includes a multimedia system decoder 1110, a clock 1145, a video buffer 1125, and a video bitstream quality analysis sub-system 1180. The operation of system decoder 1110, clock 1145, and video buffer 1125 is analogous to that described with respect to Figure 7, and thus, is described only briefly herein.

System decoder 1110 receives a digitally-encoded bitstream 1141, such as an MPEG transport stream, in packets, along with an error signal 1151 that is indicative of whether an un-correctable error was detected in the received packet. The system decoder 1110 demultiplexes or parses the digitally-encoded bitstream 1141 to separate a compressed video bitstream 1112 and timing information 1147 from the digitally-encoded bitstream 1141. Based on timing information 1147, the system decoder 1110 provides video bitstream 1112, along with an error signal 1116 to the video buffer 1125, for subsequent removal, decoding, and/or quality analysis by the video bitstream quality analysis sub-system 1180. Although error signal 1116 is depicted as a separate signal communicated to the video buffer 1125 and video bitstream quality analysis sub-system 1180, it should be appreciated that other implementations may alternatively be provided. For example, in one embodiment, system decoder 1110 marks each byte of video bitstream data to indicate the presence of erroneous data, whether due to video data loss, corruption, or delay, prior to providing the video bitstream 1112 to the video buffer 1125. As described above with respect to Figure 8, the detection of erroneous video bitstream data by the system decoder 1110 can be based upon the receipt of error signal 1151, or upon the syntax of the video bitstream, or upon a combination of both.

Video bitstream quality analysis sub-system 1180 has a first input 1111 to receive a compressed video bitstream 1112, and a second input 1115 to receive an error signal 1116. It should be appreciated that where the presence of erroneous video bitstream data is included within the video bitstream 1112 itself, only a single input (e.g., 1111) can be used. The video bitstream quality analysis sub-system 1180 includes a video decoder and loss analyzer 1120 and a Graphical User Interface (GUI) 1130. The video decoder and loss analyzer 1120 decodes the compressed video bitstream 1112 and calculates a variety of quality metrics 1171 indicative of the quality of reconstructed video output data 1161, and thus, the quality of the compressed video bitstream 1112. The GUI 1130 communicates with the video decoder and loss analyzer 1120 and can be accessed by a user with a pointing device 680 or other type of input device 690 (Figure 6). GUI 1130 is used to control the operation of the video bitstream quality analysis sub-system 1180 and to select from among the variety of quality metrics 1171 that can be provided to the user. In one mode of operation, the video bitstream quality analysis sub-system 1180 can be used as video decoder in a manner analogous to video decoder 740, described with respect to Figures 7, 9, and 10, to provide reconstructed video output data 1161. This mode of operation provides a video decoder that is more robust than conventional video decoders and which is capable of reliably re-synchronizing on valid video bitstream data in the event of data loss, corruption, or delay. In another mode of operation. the video bitstream quality analysis sub-system 1180 can be used to provide a variety of quality metrics 1171, described further below, indicative of the quality of reconstructed video output data 1161 alone, or in addition to providing reconstructed video output data 1161. Quality metrics 1171 concerning the video bitstream 1112 as well as the actual reconstructed video output data 1161 can be displayed to the user on a display (e.g., display 640 in Figure 6) via the GUI 1130. As the first mode of operation is similar to that described above with respect to Figures 7-10, only the second mode of operation is described in detail below.

Figure 12 illustrates flowchart of an exemplary video decoding and loss analysis routine according to one embodiment of the present invention. In this embodiment, the routine is implemented in software by the video bitstream quality analysis sub-system 1180, although other implementations may alternatively be used. As noted above, because the system decoder 1110 operates in a manner that is similar to system decoder 720 (Figure 7), the operation of the system decoder 1110 is not described in detail herein.

Regardless of whether errors were detected in the packetized digitally-encoded bitstream 1141, system decoder 1110 places video bitstream data, frame by frame, into the video buffer 1125 for subsequent removal and decoding by the video decoder and loss analyzer 1120. Where errors are detected by the system decoder 1120, the video bitstream data that is placed into the video buffer 1125 is marked, or created and marked to indicate the video bitstream data is potentially erroneous. Alternatively, when no errors are detected by the system decoder 1110, the video bitstream data is placed into the video buffer 1125 and the appropriate marker bits are either cleared or not set. As noted above with respect to Figure 9, this operation of the system decoder 1110 avoids the possibility of a buffer underflow condition in the video decoder and loss analyzer 1120.

At step 1210, the video decoder and loss analyzer 1120 retrieves a frame of video bitstream data from the video buffer 1125 and proceeds to step 1215. At step 1215, the video decoder and loss analyzer 1120 examines a first portion of the frame video bitstream data to determine whether that data includes erroneous data. As noted above, in one embodiment of the present invention, this is determined by examining marker bits associated with that portion of the video bitstream data. When it is determined at step 1215 that the video bitstream data is not marked as erroneous, the video decoder and loss analyzer 1120 proceeds to step 1220. At step 1220, the video decoder and loss analyzer 1120 decodes the first portion of data in the frame of video bitstream data and checks the syntax of the bitstream to detect the presence of lost or corrupted data in the video bitstream 1112. It should be appreciated that the checking of the syntax of the video bitstream 1112 is not necessary where the system decoder 1210 is capable of detecting errors contained in the underlying video bitstream based upon the receipt of an error signal from another device, such as the receiving device 775 of Figure 7. When it is determined that a syntax error has occurred in the video bitstream 1112, the video decoder and loss analyzer 1120 proceeds to steps 1230 and 1235, as described further below.

Alternatively, when no errors in the syntax of the video bitstream 1112 are detected at step 1225, the video decoder and loss analyzer 1120 proceeds to step 1255, wherein a determination is made as to whether the end of the frame of video bitstream data has been reached. When it is determined at step 1255 that the end of the frame has not been reached, the video decoder and loss analyzer 1120 returns to step 1215, wherein the next portion of data in the frame of video bitstream data is checked for errors. Alternatively, when it is determined at step 1255 that the end of the frame of video bitstream data has been reached, the video decoder and loss analyzer 1120 proceeds to step 1260. At step 1260 various quality metrics are calculated, as described further below. After calculating the quality metrics at step 1260, the video decoder and loss analyzer 1120 returns to step 1210 to retrieve the next frame of video bitstream data.

When it is determined at either of steps 1215 or 1225 that the video bitstream data is erroneous, the video decoder and loss analyzer 1120 proceeds to step 1230, wherein the video decoder and loss analyzer 1120 enters a re-synchronization mode. The re-synchronization mode is similar to that described above with Figure 10, in that the video decoder and loss analyzer 1120 examines the video bitstream data retrieved from the video buffer 1125 and searches for the next syntactic unit of information that is not accompanied by marker bits indicating that the data is invalid. Once this error-free data is found, the video decoder and loss analyzer 1120 continues decoding in a otherwise conventional manner.

However, in contrast to the operation of the video decoder described with respect to Figures 9 and 10, video decoder and loss analyzer 1120, in parallel with re-synchronizing on the next syntactic unit of video data, also decodes and marks the erroneous data until the re-synchronization point This is shown in step 1235 which is executed in parallel with step 1230. At step 1235, the video decoder and loss analyzer 1120 decodes whatever video bitstream data can be decoded and marks each reconstructed sample of reconstructed video output data 1161 with a unique pixel value to indicate that the reconstructed video data is erroneous. In one embodiment of the present invention, each erroneous reconstructed video output data pixel is marked with a unique pixel value to identify whether the pixel pertains to a frame of an I picture, a P picture, or a B picture. For example, when the erroneous reconstructed pixel pertains to a frame of an I picture, the red value of the pixel is set to 255. When the erroneous reconstructed pixel value pertains to a frame of a P picture, the green value of the pixel is set to 255, and when the erroneous reconstructed pixel value pertains to a frame of a B picture, the blue value of the pixel is set to 255. As these red, green and blue values of 255 fall outside values (16-235) recommended by the International Telecommunications Union (ITU, Recommendation 601), these values will not typically be found in an error-free bitstream. It should be appreciated that other pixel values falling outside the ITU recommended range may alternatively be used.

A significant advantage of marking erroneous reconstructed pixels in this manner is that once re-synchronization is achieved, any P or B pictures that are predicted from erroneous reconstructed pixel values will also include a red, green, or blue pixel value that is outside the recommended range (e.g., a pixel value of 255). Once re-synchronization is achieved, any reconstructed video output data 1161 having a red value of 255 can be identified as containing erroneous reconstructed video output data that was predicted from the frame of an errant I picture, and any reconstructed video output data having a green value of 255 can be identified as containing erroneous reconstructed video output data predicted from the frame of an errant P picture. Accordingly, by marking errant reconstructed video output data 1161 in this manner, the video decoder and loss analyzer 1120 is capable of identifying reconstructed video output data 1161 that was actually lost, delayed, or corrupted, as well as any reconstructed video output data 1161 that was predicted from, or otherwise dependent upon such lost, delayed, or corrupted video bitstream data.

After decoding and marking reconstructed video output data in step 1235, the video decoder and loss analyzer 1120 proceeds to step 1240. At step 1240 a determination is made as to whether re-synchronization has been achieved. When it is determined that re-synchronization has not been achieved, the video decoder and loss analyzer 1120 proceeds to step 1245. At step 1245, a determination is made as to whether the end of the frame of video bitstream data has been reached. When the end of the frame of video bitstream data has not been reached, the video decoder and loss analyzer 1120 returns to step 1235 and continues decoding and marking errant data in the manner described above. Alternatively, when it is determined at step 1245 that the end of the frame has been reached, the video decoder and loss analyzer 1120 proceeds to step 1250, wherein the video decoder and loss analyzer 1120 retrieves the next frame of video bitstream data. After retrieving the next frame of data, the video decoder and loss analyzer 1120 returns to step 1235 and executes steps 1235-1250 until re-synchronization is achieved.

Alternatively when it is determined at step 1240 that re-synchronization has been achieved, the video decoder and loss analyzer 1120 proceeds to step 1255. At step 1255 the video decoder and loss analyzer 1120 determines whether the end of the frame of video bitstream data has been reached. When it is determined that the end of the frame has not been reached, the video decoder and loss analyzer 1120 returns to step 1215, wherein the next portion of data in the frame of video bitstream data is checked for errors. Alternatively, when it is determined at step 1255 that the end of the frame of video bitstream data has been reached, the video decoder and loss analyzer 1120 proceeds to step 1260. At step 1260, the video decoder and loss analyzer 1120 calculates a number of quality metrics 1171 indicative of the quality of the reconstructed video output data 1161. Quality metrics 1171 that are calculated by the video decoder and loss analyzer 1120 can include the number of reconstructed samples of video output data that were lost, delayed, or corrupted at the slice level, the picture level, the GOP level, and the sequence level, as well as the number of reconstructed samples of video output data that were predicted from video bitstream data that was lost, delayed or corrupted. After calculating these metrics at step 1260, the video decoder and loss analyzer 1120 returns to step 1210, wherein the next frame of video bitstream data is decoded and analyzed. As illustrated in the exemplary flowchart of Figure 12, quality metrics 1171 are calculated after each frame of video bitstream data. However, it should be appreciated that these quality metrics 1171 may calculated more, or less frequently, as desired.

In the above described embodiment, all of the video bitstream data from the detection of the error until the next re-synchronization point is treated as data that is lost, corrupted or delayed. It should be appreciated that the system decoder 1110 can include a mechanism for differentiating between data that is lost, data that was received too late to be decoded (e.g., delayed), and data that was corrupted. For example, in Figure 11, an additional signal from the system decoder 1120 can be provided to the video buffer 1125 and the video bitstream quality analysis sub-system 1180 to differentiate between each type of error. Alternatively, this information can be provided as part of a multi-bit error signal 1116 on input 1115 of the video decoder and loss analyzer 1120. Where the video bitstream data is marked to indicate the presence of an error, a multi-bit marker can be used to differentiate between data that is lost, corrupted, or delayed.

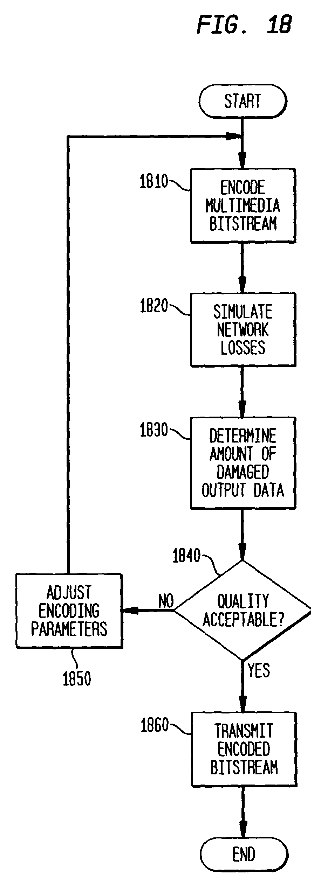

It should also be appreciated that once the quality metrics 1171 are calculated at the end of a frame (step 1260), further analysis may be performed over the length of the communication, or over a number of such communications. For example, the quality metrics calculated at step 1260 can be used to determine a bit error rate (e.g., the probability of loss, corruption or delay of a bit of video bitstream data), to determine an average burst length (e.g., how much data is typically lost, delayed, or corrupted during an error), to determine a packet loss ratio (e.g., the probability that a packet of video data will be lost, delayed or corrupted), etc. Accordingly, the video bitstream quality analysis sub-system 1180 can be used to characterize and analyze the quality of the communication received over different types of communication networks, over the same type of communication network using different networking protocols, or error correcting codes, etc. The characterization that is performed can then be used to simulate the effects of anticipated losses for various levels of encoding, etc. in a manner described with respect to Figures 17 and 18 below.

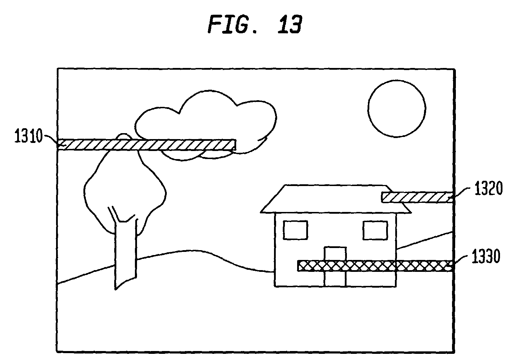

Figure 13 illustrates one exemplary illustration of the manner in which the quality metrics determined at step 1260 can be displayed to a user via the GUI 1130. It should be appreciated that Figure 13 is exemplary only, as other reporting mechanisms may alternatively be used. As shown in Figure 13, reconstructed video output data is displayed for the user with reconstructed video output data that was lost, delayed or corrupted either colored or shaded to indicate the type of frame (I, P, or B) in which the error occurred. For example, as shown in Figure 13, damaged reconstructed video data from different types of frames can each have a unique pattern of shading 1310, 1320, 1330. Where the display device (e.g., display 640 in Figure 6) being used is capable of displaying colors, the pixel color values marked at step 1335 may be used instead, with the color red indicating loss, delay, or corruption in an I frame, the color green indicating loss, delay or corruption in a P frame, and the color blue indicating loss, delay, or corruption in a B frame picture.

Figure 14 illustrates a multimedia communication quality analysis system according to another embodiment of the present invention. In the illustrative embodiment of Figure 14, decoder 500 (Figure 5) is implemented as a quality analysis system that is capable of decoding an MPEG transport stream and assessing the quality of reconstructed audio output data that can be anticipated therefrom. The multimedia communication quality analysis system 1400 may, for example, be implemented in software on a PC, such as that described in Figure 6, although other implementations may alternatively be used.

As shown in Figure 14, multimedia communication quality analysis system 1400 has a first input 1440 for receiving a packetized digitally-encoded bitstream 1441, such as an MPEG transport stream, and a second input 1450 for receiving an error signal 1451, for example, from receiving device 775 in Figure 7. The analysis system 1400 also has a first output 1460 for providing reconstructed audio output data 1461, and a second output 1470 for providing quality metrics 1471 indicative of the quality of the reconstructed audio output data 1461. As shown, analysis system 1400 includes a multimedia system decoder 1410, a clock 1445, an audio buffer 1425, and an audio bitstream quality analysis sub-system 1480. The operation of system decoder 1410, clock 1445, and audio buffer 1425 is analogous to that described with respect to Figure 7, and thus, is described only briefly herein.

System decoder 1410 receives a digitally-encoded bitstream 1441, such as an MPEG transport stream, in packets, along with an error signal 1451 that is indicative of whether an un-correctable error was detected in the received packet. The system decoder 1410 demultiplexes or parses the digitally-encoded bitstream 1441 to separate a compressed audio bitstream 1412 and timing information 1447 from the digitally-encoded bitstream 1441. Based on timing information 1447, the system decoder 1410 provides audio bitstream 1412, along with an error signal 1416 to the audio buffer 1425, for subsequent removal, decoding, and/or quality analysis by the audio bitstream quality analysis sub-system 1480. Although error signal 1416 is depicted as a separate signal communicated to the audio buffer 1425 and audio bitstream quality analysis sub-system 1480, it should be appreciated that other implementations may alternatively be provided. For example, in one embodiment, system decoder 1410 marks each byte of audio bitstream data to indicate the presence of erroneous data, whether due to audio data loss, corruption, or delay, prior to providing the audio bitstream 1412 to the audio buffer 1425. As described above with respect to Figure 8, the detection of erroneous audio bitstream data by the system decoder 1410 can be based upon the receipt of error signal 1451, or upon the syntax of the audio bitstream 1412, or upon a combination of both.

Audio bitstream quality analysis sub-system 1480 has a first input 1411 to receive a compressed audio bitstream 1412, and a second input 1415 to receive an error signal 1416. It should be appreciated that where the presence of erroneous audio bitstream data is included within the audio bitstream 1412 itself, only a single input (e.g., 1411) can be used. The audio bitstream quality analysis sub-system 1480 includes an audio decoder and loss analyzer 1420 and a Graphical User Interface (GUI) 1430. The audio decoder and loss analyzer 1420 decodes the compressed audio bitstream 1412 and calculates a variety of quality metrics 1471 indicative of the quality of reconstructed audio output data 1461, and thus, the quality of the compressed audio bitstream 1412. The GUI 1430 communicates with the audio decoder and loss analyzer 1420 and can be accessed by a user with a pointing device 680 or other type of input device 690 (Figure 6). GUI 1430 is used to control the operation of the audio bitstream quality analysis sub-system 1480 and to select from among the variety of quality metrics 1471 that can be provided to the user. In one mode of operation, the audio bitstream quality analysis sub-system 1480 can be used as audio decoder in a manner analogous to audio decoder 730, described above with respect to Figures 7 and 9, to provide reconstructed audio output data 1461. This mode of operation provides an audio decoder that is more robust than conventional audio decoders and which is capable of reliably re-synchronizing on valid audio bitstream data in the event of data loss, corruption, or delay. In another mode of operation, the audio bitstream quality analysis sub-system 1480 can be used to provide a variety of quality metrics 1471 indicative of the quality of reconstructed audio output data 1461 alone, or in addition to providing reconstructed audio output data 1461. Quality metrics 1471 concerning the audio bitstream 1412 can be displayed to the user on a display (e.g., display 640 in Figure 6) and the actual reconstructed audio output data 1461 can be output to the user on an audio output device, such as one or more speakers (e.g., audio output device 670 in Figure 6) trough use of the GUI 1430. As the first mode of operation is similar to that described above with respect to Figures 7-9 for audio decoding, only the second mode of operation is described in detail below.

Figure 15 illustrates a flowchart of an exemplary audio decoding and loss analysis routine according to one embodiment of the present invention. In one embodiment, the routine is implemented in software by the audio bitstream quality analysis sub-system 1480, although other implementations may alternatively be used. As the system decoder 1410 operates in a manner that is functionally similar to that described with respect to system decoder 720 (Figure 7), the operation of the system decoder 1410 is described only briefly herein. In a manner similar to the system decoder 720 of Figure 7, system decoder 1410 places audio bitstream data, frame by frame, into the audio buffer 1425 for subsequent removal and decoding by the audio decoder and loss analyzer 1420. Where errors are detected by the system decoder 1410, the audio bitstream data that is placed into the audio buffer 1425 is marked, or created and marked to indicate the audio bitstream data is potentially erroneous. Alternatively, when no errors are detected by the system decoder 1410, the audio bitstream data is placed into the audio buffer 1425 and the appropriate marker bits are either cleared (e.g., set to a value of zero) or simply not set. Regardless of what data is actually placed in the audio buffer 1425 and provided to the audio decoder and loss analyzer 1420, the operation of the system decoder 1410 avoids the possibility of a buffer underflow condition in the audio decoder and loss analyzer 1420.

As shown in Figure 15, the audio decoder and loss analyzer 1420 retrieves a frame of audio data from the video buffer 1425 at step 1510 and proceeds to step 1515. At step 1515, the audio decoder and loss analyzer 1420 examines a first portion of the frame of audio bitstream data to determine whether that data includes erroneous data. As noted above, in one embodiment of the present invention, this may be determined by examining marker bits associated with that portion of the audio bitstream data. When it is determined at step 1515 that the audio bitstream data is not marked as erroneous, the audio decoder and loss analyzer 1420 proceeds to step 1520. At step 1520, the audio dccoder and loss analyzer 1420 decodes the first portion of data of the frame of audio bitstream data and checks the syntax of the bitstream to detect the presence of lost or corrupted data in the audio bitstream 1412. It should be appreciated that the checking of the syntax of the audio bitstream 1412 is not necessary where the system decoder 1410 is capable of detecting errors in the underlying audio bitstream 1412 based upon the receipt of an error signal 1451 from another device, such as the receiving device 775 of Figure 7. When it is determined that a syntax error has occurred in the audio bitstream 1412, the decoder and loss analyzer 1420 proceeds to steps 1530 and 1535, described further below. Alternatively, when no errors in the syntax of the audio bitstream 1412 are detected at step 1525, the audio decoder and loss analyzer 1420 proceeds to step 1575, wherein a determination is made as to whether the end of the frame of audio bitstream data has been reached. When it is determined that the end of the frame has not been reached, the audio decoder and loss analyzer 1420 returns to step 1515, wherein the next portion of data in the frame of audio bitstream data is checked for errors. Alternatively, when it is determined at step 1575 that the end of the frame of audio bitstream data has been reached, the audio decoder and loss analyzer 1420 proceeds to step 1580, wherein the next frame of audio bitstream data is retrieved, the audio decoder and loss analyzer 1420 then returning to step 1515.

When it is determined at either of steps 1515 or 1525 that the audio bitstream data is erroneous, the audio decoder and loss analyzer 1420 proceeds to step 1530, wherein audio decoder and loss analyzer 1420 enters a re-synchronization mode. The re-synchronization mode is similar to that already described above for audio decoder 730 (Figure 7), in that the audio decoder and loss analyzer 1420 examines the audio bitstream data retrieved from the audio buffer 1425 and searches for the next syntactic unit of information that is not accompanied by marker bits indicating that the data is invalid. Once this error-free data is found, the audio decoder and loss analyzer 1420 continues decoding in a otherwise conventional manner.

However, in parallel with re-synchronizing on the next error-free syntactic unit of audio bitstream data at step 1530, the audio decoder and loss analyzer 1420 also performs a number of steps to identify how much reconstructed audio output data has been damaged due to the presence of lost, delayed, or corrupted data in the audio bitstream 1412. In one embodiment, the audio decoder and loss analyzer 1420 identifies the number of reconstructed samples of audio output data that have been damaged due to actual data loss, delay, or corruption, as well as the number of reconstructed samples of audio output data that have been damaged due to data loss, delay, or corruption in a preceding frame. However, in contrast to a video bitstream, it is more difficult to determine when an audio bitstream 1412 no longer suffers from lost, corrupted, or delayed audio bitstream data of a prior frame. This is because unlike an I-picture of a video sequence, there is no point within an audio sequence that is guaranteed to be independent of preceding frames. Thus, although the use of the error signal 1416 indicates that the audio bitstream 1412 is itself no longer erroneous, it is difficult to identify exactly when reconstructed audio output data 1461 decoded from valid audio bitstream data is no longer dependent on erroneous audio bitstream data of a preceding frame.

However, the inventors have determined that it is possible to empirically identify that reconstructed audio output data 1461 is no longer dependent on the erroneous audio bitstream data of a previous frame. Specifically, by performing an audio decoding using the current frame of audio bitstream data and simultaneously performing an audio decoding using the current frame of compressed audio data and information from audio bitstream data of a prior non-errant frame, it is possible to identify that the effect of an error is no longer present. In particular, the present inventors have found that when decoding parameters from these two different decodings are equal, the reconstructed audio output data 1461 is no longer dependent on prior errant audio bitstream data. Accordingly, when an error is detected at either of steps 1515 or 1525, in addition to re-synchronizing on the next syntactic unit of data at step 1530, the audio decoder and loss analyzer 1420, in parallel, proceeds to step 1535.

At step 1535, the audio decoder and loss analyzer 1420 marks the start of erroneous data and proceeds, in parallel, to steps 1540 and 1545. At step 1540, the audio decoder and loss analyzer 1420 attempts to decode the current frame of audio bitstream data in a conventional manner. In parallel with step 1540, the audio decoder and loss analyzer 1420 of the present invention also decodes the current frame of audio bitstream data based upon header data (e.g., 212 in Figure 2) received in the previous, non-corrupted frame of audio bitstream data. At step 1550, the audio decoder and loss analyzer 1420 compares decoding coefficients from the audio decodings performed at steps 1540 and 1545, and proceeds to step 1555. In one embodiment, the decoding coefficients that are compared at step 1550 include pitch prediction coefficients and linear prediction coefficients. However, it should be appreciated other decoding coefficients may be used alternatively, or in addition to pitch prediction and linear prediction coefficients. Moreover, the actual reconstructed audio output data from each decoding may alternatively be compared at step 1550. The comparison of only certain decoding parameters has been experimentally determined to be sufficient to identify that the reconstructed audio output data 1461 is no longer affected by previous errors. It should be appreciated tat the comparison of only certain decoding parameter dispenses with the need for a complete decoding and thus, can be performed more quickly than a comparison based on a complete decoding.

At step 1555 a determination is made as to whether the decoding parameters compared at step 1550 are equal. When it is determined that the decoding parameters are equal, the audio decoder and loss analyzer 1420 proceeds to step 1560, wherein the end of the error is marked and a metric indicative of the amount of lost data is calculated. As each frame of audio data represents a fixed number of samples of audio data, determining the number of reconstructed samples of audio data that have been affected can be easily determined when the sampling frequency and the beginning and end of the error are known. After marking the end of the data and calculating the number of damaged reconstructed samples of audio data, the audio decoder and loss analyzer 1420 proceeds to step 1575, wherein it is determined whether the end of the frame has been reached in a manner already described above.

Alternatively, when it is determined at step 1555 that the decoding parameters compared at step 1550 are not equal, the audio decoder and loss analyzer 1420 proceeds to step 1565. At step 1555, a determination is made as to whether the end of the frame of audio bitstream data has been reached. When the end of the frame has been reached, the audio decoder and loss analyzer 1420 proceeds to step 1570, wherein the next frame of audio bitstream data is retrieved from the audio buffer 1425, and steps 1540-1555 are performed in the manner described above. Alternatively, when it is determined that the end of the frame has not been reached, the audio decoder and loss analyzer 1420 proceeds returns to process the rest of the audio bitstream data according to steps 1540-1555.

After calculating the quality metric 1471 at step 1560, the quality metric 1471 can be displayed to the user through the use of the GUI 1430. It should also be appreciated that once the quality metric 1471 is calculated at step 1560, further analysis may be performed over the length of the communication or over a number of such communications. For example, the metrics calculated at step 1560 can be used to determine a bit error rate (e.g., the probability of loss, corruption or delay of a bit of audio bitstream data), to determine an average burst length (e.g., how much audio data is typically lost during an error), to determine a packet loss ratio (e.g., the probability that a packet of audio data will be lost, delayed or corrupted), etc. Accordingly, the audio bitstream quality analysis sub-system 1480 can be used to characterize and analyze the quality of the audio portion of a multimedia communication received over different types of communication networks, over the same type of communication network using different networking protocols, or error correcting codes, etc. These quality metrics 1471 can then be displayed to a user via the GUI 1430.

In another embodiment of the present invention, a multimedia communication quality analysis system is provided. In one illustrative embodiment, decoder 500 (Figure 5) is implemented as a multimedia communication quality analysis system 1600 to receive a packetized digitally-encoded bitstream, provide reconstructed audio and video output data, and assess the quality of both audio and video bitstream data, and thus the quality of the overall communication. As shown in Figure 16, the multimedia communication quality analysis system 1600 includes a multimedia system decoder 1610, an audio buffer 1625, a video buffer 1635, a clock 1645, an audio decoder and loss analyzer 1630, a video decoder and loss analyzer 1640, and a GUI 1650 that communicates with both the audio decoder and loss analyzer 1630 and the video decoder and loss analyzer 1640. The analysis system 1600 has a first input 1605 for receiving a packetized digitally-encoded bitstream 1606, such as an MPEG transport stream, and a second input 1615 for receiving an error signal 1616, for example, from a receiving device 775 (Figure 7). The analysis system 1600 also has a first output 1680 for providing reconstructed (i.e., decoded) audio output data 1681, a second output 1690 for providing reconstructed video output data 1691, and a third output 1670 for providing quality metrics 1671 indicative of the quality of the reconstructed audio and video output data 1681, 1691. The multimedia communication quality analysis system 1600 combines the capabilities of the video and audio quality analysis sub-systems (1180, 1480) described above, and thus, further details of the operation of the quality analysis system 1600 are not described in further detail herein.

In another embodiment, a multimedia communication quality analysis system is provided that is capable of simulating various types of errors on a digitally compressed multimedia bitstream and providing information indicative of the expected quality of reconstructed output data. The system can be used to simulate the affect of different error rates on reconstructed audio and video output data for different levels of encoding, for the same level of encoding transmitted over different types of communication networks, for the same level of encoding transmitted over a particular type of communication network but using different network communication protocols, etc. The quality analysis system can be used by communication providers) such as broadcasters, to select the degree of encoding that optimizes communication bandwidth for a given level of expected quality. Moreover, such a quality analysis system can also be used prior to transmission or broadcasting to identify whether encoding parameters should be modified to provide a particular level of quality in the reconstructed output data, etc.

As shown in Figure 17, the multimedia communication quality analysis system 1700 includes a MPEG-2 multimedia encoder 1710 to receive an audio bitstream 1765 and a video bitstream 1770, encode and multiplex the audio and video bitstreams into an MPEG transport stream 1715, and provide the MPEG transport stream 1715 to a plurality of communication layers 1720 for transmission. An error simulator 1730 receives a packetized MPEG transport stream 1725 from the plurality of communication layers 1720 and simulates losses that may be expected to occur over a lossy communication channel. As shown in Figure 17, the error simulator 1730 receives one or more error signals, 1775, 1780 that control the number and/or extent of errors generated by the error simulator. For example, error signal 1775 may be specified as a packet loss ratio (PLR) indicative of the probability of losing or corrupting a packet of data, and error signal 1780 may be specified as an Average Burst Length (ABL) indicative of the length of the error. Alternatively, other error metrics may be used. Such metrics may be determined based on industry accepted norms, or based on actual metrics determined by the quality analysis systems of Figures 11, 14, or 16.

Error simulator 1730 provides a lossy packetized MPEG transport stream 1735 to a plurality of communication layers 1740, that, in turn, extracts MPEG transport stream packets from the lossy packetized MPEG transport stream 1735 and provides the MPEG transport stream packets 1735, along with an error signal 1747, to the multimedia quality analysis system 1600 of Figure 16. The quality analysis system 1600 provides metrics relating to the quality of reconstructed audio and video data that would be provided to by a user if that MPEG transport stream 1715 were received over a communication network having the simulated error characteristics. The quality analysis system 1700 of Figure 17 may also include a transceiver 1750 for communicating the packetized MPEG transport stream 1760 over a communication medium when it is determined that an appropriate expected level of quality in the reconstructed output data is achieved.

The multimedia communication quality analysis system 1700 advantageously permits a broadcaster or other user to simulate the level of quality of reconstructed output data that can be anticipated from decoding the packetized MPEG transport stream, prior to actually transmitting any information over a communication medium. This enables a user to alter the manner in which audio and video data is encoded to increase the anticipated quality of reconstructed data, or to conserve bandwidth, depending on the quality requirements of the intended recipient of that communication. For example, to increase the anticipated quality of reconstructed output data and permit early re-synchronization, a user can increase the number of I pictures in the encoded video bitstream, include additional headers (e.g., GOP headers) in the encoded video bitstream, use smaller slices (i.e., fewer lines per slice), or reduce the bit rate of the encoded video bitstream. The user can also increase the quality of reconstructed data by including error correction capabilities, or if already present, by increasing error correction capabilities, by using more reliable communication layers (e.g., TCP rather than UDP), or limiting transmissions to more robust communication media, etc. Moreover; a combination of these techniques can be used to increase the anticipated quality of reconstructed output data. Alternatively, if the anticipated quality of reconstructed output data is greater than necessary, the encoding and transmission of the communication can be altered to decrease the bandwidth of the communication and use that bandwidth elsewhere. In this manner, the present invention can be used to allow a communication provider to offer different levels of quality tailored to meet the requirements of different recipients of this information.

Although the multimedia communication quality analysis system 1700 of Figure 17 is depicted as including communication layers 1720 and 1740, it should be appreciated that these are not necessary to practice the present invention. For example, to study the impact of different types of encoding on the anticipated level of quality of reconstructed output data, communication layers 1720 and 1740 may be omitted. Accordingly, it should be appreciated that the multimedia communication quality analysis system 1700 is exemplary only, as other implementations may alternatively be used.

Figure 18 illustrates a flowchart of a multimedia communication quality analysis routine according to one illustrative embodiment of the present invention. The routine can be used to select encoding parameters for a multimedia bitstream that provides a predetermined level of quality in reconstructed output data for a selected error rate. Once a predetermined level of quality is obtained, the multimedia bitstream can be communicated to another communication device for receipt and reconstruction of the encoded data The routine may be implemented by the multimedia communication quality analysis system 1700 in software on a computer, such as that described above with respect to Figure 6. Of course, it should be appreciated that other implementations are possible, as known by those skilled in the art.

As shown in Figure 18, at step 1810, the quality analysis routine encodes audio and video bitstream data 1765, 1770 and proceeds to step 1820. At step 1820, a selected error rate 1775, 1780 is applied to the encoded multimedia bitstream 1715 or 1725 to create an errant multimedia bitstream 1735 that simulates data loss, corruption, and delay that can be anticipated during the communication, wherein the routine proceeds to step 1830. At step 1830, the errant multimedia bitstream 1743 is analyzed to determine the amount of reconstructed audio and/or video output data that is lost, delayed, or corrupted, as well as any reconstructed audio and/or video output data that was dependent upon such lost, delayed, or corrupted data. After analyzing the quality of the reconstructed output data at step 1830, the routine proceeds to step 1840, wherein a determination is made as to whether the quality of the reconstructed output data is acceptable.

When it is determined that the quality of the reconstructed output data is not acceptable, the routine proceeds to step 1850. At step 1850, encoding parameters are adjusted to either increase or decrease the expected quality of reconstructed output data for the selected error rate. For example, the number of I pictures in the encoded video data can be adjusted, the size of each slice can be adjusted, the bit rate of the video data or the sampling frequency of the audio data can be adjusted, etc. After adjusting encoding parameters at step 1850, the routine returns to step 1810, wherein steps 1810 through 1840 are repeated based on the adjusted encoding parameters. Alternatively, when it is determined at step 1840 that the quality of the reconstructed output data is acceptable, the routine proceeds to step 1860. At step 1860, the encoded multimedia bitstream is communicated over some form of communication medium so that it may be received by another communication device.

In another embodiment of the present invention, a multimedia communication quality analysis system is provided for decoding and assessing the quality of an INTERNET telephony communication. This embodiment is specifically adapted to decode and assess the quality of an audio bitstream encoded according to the G.723.1 audio encoding standard. However, it should be appreciated that the described exemplary embodiment may be modified to decode and assess the quality of other standardized compressed audio bitstreams, such as G.711, G.722, G.728, and G.729. Moreover, the described embodiment may be used as part of an analysis system similar to that described above with respect to Figure 17 and 18 to simulate anticipated error rates and adjust the encoding of compressed audio bitstream prior to transmission.

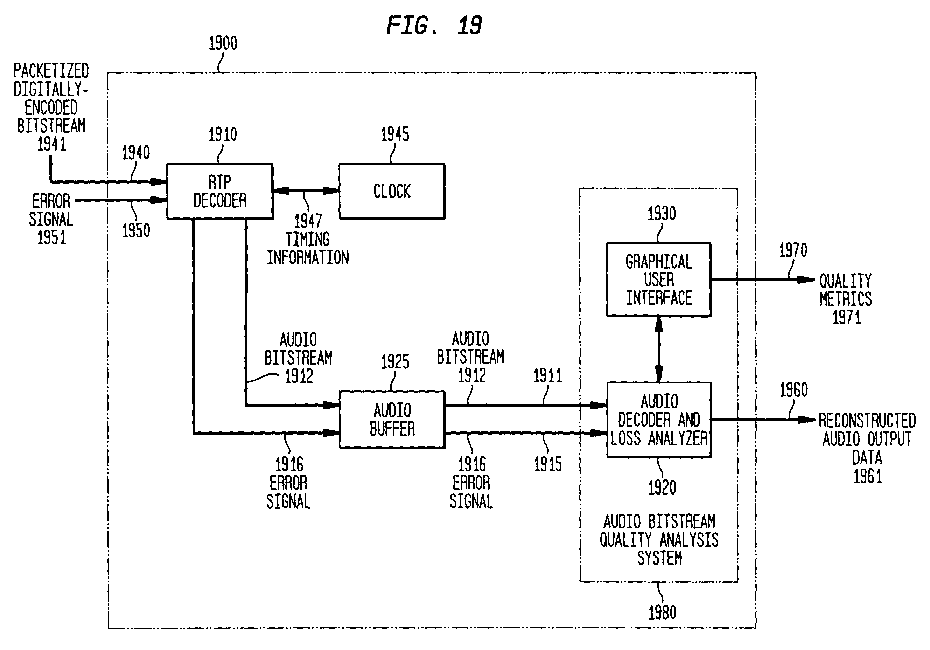

In the illustrative embodiment of Figure 19, decoder 500 (Figure 5) is implemented as a quality analysis system that receives a G.723.1 audio bitstream transmitted over an IP network. The multimedia communication quality analysis system 1900 may, for example, be implemented in software on a PC, such as that described in Figure 6, although other implementations may alternatively be used.

Multimedia communication quality analysis system 1900 is specifically adapted to decode and assess the quality of a G.723.1 audio bitstream that is transmitted over an IP network using UDP as the transport layer and RTP as the session layer. The RTP session layer provides a sequence number for each packet of compressed audio bitstream data that uniquely identifies each packet of audio bitstream data. The sequence number is contained within the RTP packet header, and is similar to the continuity counter described with respect to Figure 2. The RTP session layer also provides a time stamp, contained within the RTP packet header, that identifies the time at which each packet of compressed audio bitstream data was encoded.

The use of RTP over UDP is traditionally preferred for real time communications, such as INTERNET telephony, even though UDP is considered less reliable than other transport layers, such as TCP. This is because the RTP transport layer requires less processing overhead than other, more reliable transport layers. Of course, it should be appreciated that analysis system 1900 can be readily modified to decode and assess the quality of audio bitstreams communicated using other communication protocol layers.

As shown in Figure 19, the multimedia communication quality analysis system 1900 has a first input 1940 for receiving a packetized digitally encoded bitstream 1941, and a second input 1950 for receiving an error signal 1951, for example, from a receiving device 775 (Figure 7). The analysis system 1900 also has a first output 1960 for providing reconstructed (i.e., decoded) audio output data 1961, and a second output 1970 for providing quality metrics indicative of the quality of reconstructed audio output data 1961. As shown, analysis system 1900 includes an RTP decoder 1910, an audio buffer 1925, a clock 1945, and an audio bitstream quality analysis sub-system 1980.

In contrast to a conventional RTP decoder, the RTP decoder of the present invention uses information conveyed by error signal 1951 to alert an audio decoder (e.g., audio decoder and loss analyzer 1920), to the presence of corrupted audio bitstream data within the audio bitstream 1912. In addition, the RTP decoder of the present invention is also capable of alerting an audio decoder (e.g., audio decoder and loss analyzer) to the presence of lost or delayed audio bitstream data within an audio bitstream.

RTP decoder 1910 receives a digitally-encoded bitstream 1941, such as an INTERNET telephony bitstream, in RTP packets, along with an error signal 1951 that is indicative of whether corruption was detected in the received RTP packet. The RTP decoder 1910 parses the compressed audio bitstream data from the received RTP packet and provides audio bitstream 1912, along with an error signal 1916, to the audio buffer 1925 for subsequent removal, decoding, and/or quality analysis by the audio bitstream quality analysis subsystem 1980. The RTP decoder 1910 uses error signal 1916 to alert the audio bitstream quality analysis subsystem 1980 to the presence of lost, corrupted, or delayed data within the audio bitstream 1912.

Although error signal 1916 is depicted as being a separate signal communicated to the audio buffer 1925 and the audio bitstream quality analysis subsystem 1980, it should be appreciated that other implementations are possible. For example, as described further below, in one embodiment, error signal 1916 is provided to the audio buffer 1925 and the audio bitstream quality analysis subsystem 1980 within the audio bitstream data. In this embodiment, when error signal 1951 indicates that the received packet includes corrupted data, the RTP decoder 1910 marks each byte of audio bitstream data to indicate the presence of erroneous data therein. Of course, it should be appreciated that other forms of marking may alternatively be used. For example, the marking of audio bitstream data may be implemented on a frame by frame basis, for each frame of audio bitstream data within a RTP packet that is identified as being corrupted.

For each received RTP packet of audio bitstream data that is not accompanied by an error signal 1951, the RTP decoder 1910 examines the RTP packet header to detect the presence of lost or delayed packets of audio bitstream data. Based on the sequence number of the RTP packet, the RTP decoder 1910 can detect the loss of one or more packets of audio bitstream data in a manner analogous to system decoder 720 described above with respect to Figure 8. Furthermore, because each RTP packet header includes a time stamp indicative of the time at which that portion of the audio bitstream was encoded, the RTP decoder 1910 can also detect RTP packets of audio bitstream data that have been received too late to be decoded. It should be appreciated that RTP packets that are lost or delayed are equivalent as far as the RTP decoder is concerned, as error-free reconstructed audio output data cannot be properly reconstructed and presented in real time.

Although the time stamp included in the RTP packet header indicates the time at which that portion of the audio bitstream was encoded, this information can be used to determine whether an RTP packet of audio bitstream data has been received too late to be decoded. Specifically, because an audio bitstream that is used in an INTERNET telephony application is encoded in real time, the relative difference in time between successively encoded portions of the audio bitstream can be used to infer the time at which those successive portions of the audio bitstream should be decoded. In one embodiment of the present invention, the RTP decoder 1910 synchronizes its own clock 1945 to the time stamp of the first received RTP packet. The RTP decoder 1910 uses this time stamp as a reference to identify the time at which the first received packet should be placed in the audio buffer 1925. The time stamps of subsequent RTP packets of audio bitstream data can then be used to identify the time at which should be placed in the audio buffer 1925. By comparing the value of the time stamps of each received RTP packet to the value of the RTP decoder's own clock 1945, the RTP decoder 1910 can identify when an RTP packet has been received too late for decoding.

When a received RTP packet of audio bitstream data is not lost, corrupted, or delayed, the RTP decoder 1910 extracts the compressed audio bitstream 1912 and places that audio bitstream 1912, frame by frame, into the audio buffer 1925, for subsequent removal and decoding by the audio bitstream quality analysis system 1980. Alternatively, when the received RTP packet of audio bitstream data is accompanied by error signal 1951 indicative of the presence of corruption within the received packet, die RTP decoder 1910 extracts the audio bitstream data contained therein and marks each byte of audio bitstream data as being potentially corrupted. The RTP decoder 1910 then places the marked bitstream data, frame by frame, into the audio buffer 1925. This operation of the RTP decoder is analogous to that of the system decoder 720 described above with respect to Figures 7 and 8. Alternatively, when the RTP decoder detects that an RTP packet is missing (i.e., lost) or is received too late to be decoded, the RTP decoder 1910 creates and marks replacement audio bitstream data and places that data, frame by frame, into the audio buffer 1925. This operation of the RTP decoder is analogous to that of the system decoder 720 described above with respect to Figures 7 and 8, and prevents the possibility of a buffer underflow condition.

As shown in Figure 19, audio bitstream quality analysis sub-system 1980 has a first input 1911 to receive a compressed G.723.1 audio bitstream 1912, and a second input 1915 to receive an error signal 1916 relating to the audio bitstream 1912. It should be appreciated that where the presence of erroneous audio bitstream data is included within the audio bitstream 1911 itself, only a single input (e.g., 1911) can be used. The audio bitstream quality analysis sub-system 1980 includes an audio decoder and loss analyzer 1920, and a Graphical User Interface (GUI) 1930. The audio decoder and loss analyzer 1920 decodes the compressed audio bitstream 1912 and calculates a variety of quality metrics 1971 indicative of the quality of reconstructed audio output data, and thus, the quality of the compressed audio bitstream 1912. The GUI 1930 communicates with the audio decoder and loss analyzer 1920 and can be accessed by a user with a pointing device 680 or other type of input device 690 (Figure 6). GUI 1930 is used to control the operation of the audio bitstream analysis system 1900 and to select from among a variety of various quality metrics 1971 that can be provided to the user.

In one mode of operation, the audio bitstream quality analysis sub-system 1980 can be used as aG.723.1 audio decoder to provide reconstructed audio output data 1961. In another mode of operation, the audio bitstream quality analysis sub-system 1980 can be used to provide metrics 1971 indicative of the quality of the reconstructed audio output data, alone or in addition to providing reconstructed audio output data 1961. Quality information 1971 concerning the audio bitstream 1911 can be displayed to the user on a display (e.g., display 640 in Figure 6), and the actual reconstructed audio output data 1961 can be output to the user on an audio output device, such as one or more speakers (.e.g., audio output device 670 in Figure 6) through use of the GUI 1930. As the first mode of operation is similar to a conventional G.723.1 audio decoder, only the second mode of operation is described in detail below.

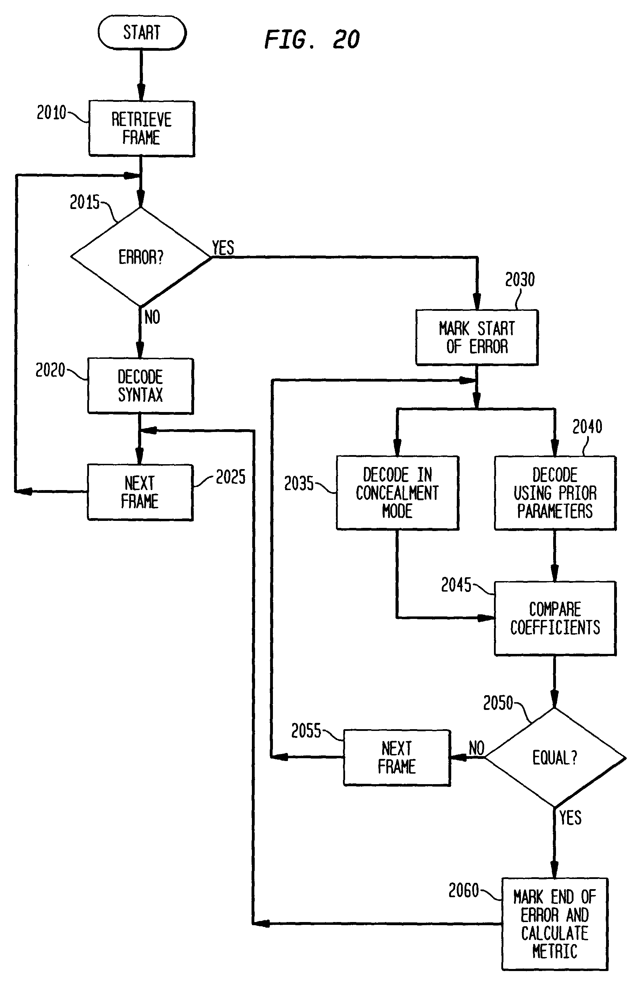

Figure 20 illustrates a flowchart of an exemplary audio decoding and loss analysis routine according to one embodiment of the present invention. In one embodiment, the routine is implemented in software by the audio bitstream quality analysis sub-system 1980, although other implementations may alternatively be used.

As described above, RTP decoder 1910 places audio bitstream data, frame by frame, into the audio buffer 1925 for subsequent decoding by the audio decoder and loss analyzer 1920. Where errors are detected by the RTP decoder 1910, either based upon the assertion of error signal 1951 provided to the RTP decoder, or due to the detection of lost or delayed audio bitstream data, the audio bitstream data that is placed into the audio buffer 1925 is marked, or created and marked to indicate that the audio bitstream data is potentially erroneous. Alternatively, when no errors are detected by the RTP decoder 1910, the audio bitstream data is placed into the audio buffer 1925 and the appropriate marker bits are either cleared (e.g., set to a value of zero) or simply not set. Regardless of what data is actually placed in the audio buffer 1925 and provided to the audio decoder and loss analyzer 1920, this operation of the RTP decoder 1910 avoids the possibility of a buffer underflow condition in the audio decoder and loss analyzer 1920.

As shown in Figure 20, the audio decoder and loss analyzer 1920 retrieves a frame of audio data from the audio buffer 1925 at step 2010 and proceeds to step 2015. At step 2015, the audio decoder and loss analyzer 1920 examines a the frame of audio bitstream data to determine whether that data includes erroneous data. As noted above, in one embodiment of the present invention, this may be determined by examining marker bits associated with that frame of audio bitstream data. When it is determined at step 2015 that the audio bitstream data is not marked as erroneous, the audio decoder and loss analyzer 1920 proceeds to step 2020. At step 2020, the audio decoder and loss analyzer 2020 decodes the frame of audio bitstream data in an otherwise conventional manner, and proceeds to step 2025, wherein the next frame of audio bitstream data is retrieved from the audio buffer 1925. After retrieving the next frame of audio bitstream data, the audio decoder and loss analyzer returns to step 2015.

Alternatively, when it is determined at step 2015 that the audio bitstream data is erroneous, the audio decoder and loss analyzer 1920 performs a number of steps to identify how much data has been corrupted due to the presence of lost, delayed, or corrupted data in the audio bitstream 1912. In a manner similar to that described with respect to Figure 15, the audio decoder and loss analyzer 1920 of this embodiment performs a parallel decoding of audio bitstream to determine that the presence of an error in a prior frame of audio bitstream data no longer impacts the reconstructed output data of a current frame. The audio decoder and loss analyzer 1920 uses this parallel decoding to identify both the number of reconstructed samples of audio output data that have actually been lost, corrupted or delayed, as well as the number of reconstructed samples of audio output data that could not be properly reconstructed due to errors in a preceding frame.

At step 2030, the audio decoder and loss analyzer 1920 marks the start of erroneous data and proceeds to steps 2035 and 2040. At step 2035, the audio decoder and loss analyzer 1920 decodes the audio bitstream data in a concealment mode. As this concealment mode is well known to those skilled in the art of G.723.1 audio decoding, and is documented in the G.723.1 standard, a detailed description of this mode is omitted herein. However, for the benefit of a general understanding, the concealment mode is essentially a fall-back mode in a G.723.1 decoder that masks the perception of errors in reconstructed audio output data. Where the user has selected that the reconstructed audio output data 1961 be output to the user on an audio output device, the reconstructed audio output data can be provided based on the concealment mode decoding. In parallel with step 2035, the audio decoder and loss analyzer 1920 also decodes the current audio bitstream data based upon header data (e.g., 212 in Figure 2) received in the previous, non-corrupted frame of audio bitstream data.

At step 2045, the audio decoder and loss analyzer 1920 compares decoding coefficients from the audio decodings performed at steps 2035 and 2040, and proceeds to step 2050. In one embodiment, the decoding coefficients that are compared at step 2045 are pitch prediction coefficients and linear prediction coefficients. However, as discussed above with respect to Figure 15, it should be appreciated other decoding coefficients may be used alternatively, or in addition to pitch prediction and linear prediction coefficients.

At step 2050 a determination is made as to whether the decoding parameters compared at step 2045 are equal. When it is determined that the decoding parameters are equal, the audio decoder and loss analyzer 1920 proceeds to step 2060, wherein the end of the error is marked and a metric indicative of the amount of lost data is calculated. As each frame of audio data represents a fixed number of samples of audio data, determining the number of reconstructed samples of audio data that have been affected can be easily determined when the sampling frequency and the beginning and end of the error are known. After marking the end of the data and calculating the number of damaged reconstructed samples of audio data, the audio decoder and loss analyzer 1920 proceeds to step 2045, wherein the next frame of audio bitstream data is processed.

Alternatively, when it is determined at step 2050 that the decoding parameters compared at step 2045 are not equal, the audio decoder and loss analyzer 1920 proceeds to step 2055, wherein the audio decoder and loss analyzer 1920 retrieves the next frame of audio bitstream data. After retrieving the next frame of audio bitstream data at step 2055, the audio decoder and loss analyzer 1920 performs steps 2035-2050 in the manner described above.

After calculating the quality metric 1971 at step 2060, the quality metric 1971 can be displayed to the user through the use of the GUI 1930. It should also be appreciated that once the quality metric 1971 is calculated at step 2060, further analysis may be performed over the length of the communication or a number of such communications. For example, the metrics calculated at step 2060 can be used to determine a bit error rate (e.g., the probability of loss, corruption or delay of a bit of audio bitstream data), to determine an average burst length (e.g., how much audio data is typically lost during an error), to determine a packet loss ratio (e.g., the probability that a packet of audio data will be lost, delayed or corrupted), etc. Accordingly, the audio bitstream quality analysis sub-system 1980 can be used to characterize and analyze the quality of the audio portion of a multimedia communication received over different types of communication networks, over the same type of communication network using different networking protocols, or error correcting codes, etc. These quality metrics 1971 can then be displayed to a user via the GUI 1930.

Although the above described multimedia communication quality analysis system 1900 was described with respect to an INTERNET telephony communication that included an audio bitstream encoded according to the G.723.1 encoding standard, it should be appreciated that the analysis system 1900 can be modified to decode and assess the quality of other types of audio bitstreams, such as G.711, G.722, G.728, and G.729. Moreover, it should be appreciated that a multimedia communication quality analysis system similar to analysis system 1900 can be provided for a video bitstream. For example, in a video conferencing application over the INTERNET, multimedia communication quality analysis system 1900 can be used for the audio portion of the communication and a separate quality analysis system can be provided for the video portion of the communication. As known to those skilled in the art, the audio and video portions of a video conferencing communication sent over the INTERNET will typically be communicated using independent bitstreams, rather than being multiplexed into a single bitstream. For this application, analysis system 1900 can be used for the audio portion, and a separate analysis system can be used for the video portion. For example, the system decoder 1110 of Figure 11 can be replaced by an RTP decoder that is adapted to receive just the video portion of the video conferencing communication.

Having described several embodiments of the invention in detail, various modifications and improvements will readily occur to those skilled in the art within the scope of the invention. In particular, although various embodiments have been described primarily in terms of the MPEG and G.723.1 standards, it should be appreciated that they are equally applicable to other audio and/or video compression schemes, such as H.261, H.263, G.711, etc. Furthermore, it should be appreciated that the teachings herein are not limited to the reception of digitally encoded audio and/or video data over a specific type of switched packet network, as they are applicable to audio and/or video communications received over any type of switched packet network, such as digital TV over satellite, digital TV over cable, digital TV over terrestrial broadcasting, audio (e.g. voice) and/or video over IP, or audio and/or video over ATM, etc.

The disclosures in United States patent application no. 09/317,584, from which this application claims priority, and in the abstract accompanying this application, are incorporated herein by reference.

## Claims

1. A multimedia decoder (710) for decoding a multimedia bitstream (765), comprising:
a system decoder (720) operable to receive a multimedia bitstream and to provide at least one of an audio bitstream (727) and a video bitstream (737) along with a first error signal (736) that identifies whether the at least one of the audio bitstream and the video bitstream contains erroneous data.

2. A multimedia decoder as in claim 1, comprising:
a video decoder (740) coupled to the system decoder and operable to receive the video bitstream along with the first error signal and to decode the video bitstream, wherein the first error signal identifies whether the video bitstream contains erroneous data.

3. A multimedia decoder as in claim 1 or 2, wherein the system decoder (720) is operable to provide a second error signal (726) along with the audio bitstream that identifies whether the audio bitstream contains erroneous data; and wherein the multimedia decoder comprises an audio decoder (730) coupled to the system decoder and operable to receive the audio bitstream along with the second error signal and to decode the audio bitstream.

4. A multimedia decoder as in claim 1, 2 or 3, wherein the multimedia bitstream is contained within a multimedia communication (776) received in packets from a receiving device (775), and wherein the system decoder includes a first input (721) operable to receive the multimedia bitstream in packets from the receiving device and a second input (722) operable to receive a second error signal (766) from the receiving device that identifies whether a packet of the multimedia bitstream contains erroneous data.

5. A method of decoding a multimedia bitstream, comprising the steps of:
receiving the multimedia bitstream;
detecting whether the multimedia bitstream (765) includes erroneous data;
separating at least one of a compressed audio bitstream (727) and a compressed video bitstream (737) from the multimedia bitstream; and
alerting at least one of an audio decoder (730) and a video decoder (740) when erroneous data is detected in the multimedia bitstream.

6. A method as in claim 5, comprising the step of determining an amount of decoded audio data that could not be decoded from the compressed audio bitstream due to the erroneous data.

7. A method as in claim 5 or 6, comprising the step of determining an amount of decoded video data that could not be decoded from the compressed video bitstream due to the erroneous data.

8. An analyser (1600) for assessing a quality of a compressed bitstream (1606), comprising:
an input (1605) operable to receive a compressed bitstream; and
an output (1670) operable to provide a metric (1671) indicative of an amount of data in the compressed bitstream that could not be correctly reconstructed due to errors in the compressed bitstream.

9. An analyser as in claim 8, wherein the metric is operable to indicate the number of samples of reconstructed data that were one of lost, delayed, and corrupted due to errors in the compressed bitstream as well as the number of samples of reconstructed data that were dependent on the samples of reconstructed data that were one of lost, delayed, and corrupted.

10. An analyser as in claim 8 or 9, comprising an error simulator (1730) including an input operable to receive an error-free compressed bitstream and an output operable to provide a compressed bitstream having a specified error rate.
